# EUROPEAN PATENT APPLICATION

(11) **EP 4 468 780 A1**
(43) Date of publication of application: **27.11.2024**
(21) Application number: 23759277.9
(22) Date of filing: 24.02.2023
(51) Int. Cl.: H04W 28/02

(54) **COMMUNICATION METHOD AND APPARATUS**

(30) Priority: 26.02.2022 CN 202210181554
(71) Applicant: Huawei Technologies Co., Ltd., Shenzhen, Guangdong 518129 (CN)
(72) Inventor: XU, Shengfeng, Shenzhen, Guangdong 518129 (CN); YING, Jiangwei, Shenzhen, Guangdong 518129 (CN)
(74) Representative: Goddar, Heinz J.
(86) International application number: PCT/CN2023/078167
(87) International publication number: WO 2023/160655

(57) **Abstract**

A communication method and apparatus are provided, to shorten service delay. In the method, after receiving a first request for requesting a first service, a service control network element properly selects a first computing network element based on the first request, and sends information about the first computing network element to an access network device, so that the first access network device can send data #1 of the first service to the first computing network element. The first computing network element may be configured to process the data #1 of the first service, to generate data #2 of the first service. In this manner, the service control network element is supported in selecting the first computing network element closer to the access network device, to shorten transmission delay.

## Description

### CROSS-REFERENCE TO RELATED APPLICATIONS

This application claims priority to Chinese Patent Application No. 202210181554.0, filed with the China National Intellectual Property Administration on February 26, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a current mobile communication architecture, a network function and an entity are supported in computing data from a terminal or an access network device, to provide a service or meet a service requirement. For example, a service network element may control, based on a request of a requester, the access network device to collect service data, process and compute the service data fed back by the access network device, and feed back service data obtained after the processing and computation to the requester. The service herein may be a sensing service or another service, which is not specifically limited.

However, in the foregoing service processing solution, the service network element is usually deployed in a core network and far away from the terminal or the access network device. Consequently, service delay is high.

### SUMMARY

This application provides a communication method and apparatus, to shorten service delay.

According to a first aspect, an embodiment of this application provides a communication method. The communication method may be implemented by a service control network element or a component in the service control network element, and the component is at least one of a processor, a transceiver, a processing module, or a transceiver module. For a sensing service, the service control network element may include a sensing control function (sensing control function, SCF) network element or a sensing and computing control function (sensing and computing control NF, SCCF) network element. An example in which an execution body is the service control network element is used. The method includes: The service control network element receives a first request from a first device, where the first request is for requesting a first service. The service control network element determines a first computing network element based on the first request, where the first computing network element is configured to generate first data of the first service. The service control network element sends information about the first computing network element to an access network device.

According to the method, after receiving the first request for requesting the first service, the service control network element may properly select the first computing network element based on the first request, and send the information about the first computing network element to the access network device, so that the first access network device can send the data of the first service to the first computing network element. The first computing network element may be configured to compute or process the data of the first service from the access network device, to generate the first data of the first service. In this manner, the first computing network element closer to the access network device is supported in obtaining the first data of the first service, to shorten transmission delay. In addition, functions of computing and processing the data sent by the access network and generating the first data are released from the service control network element to the computing network element, so that congestion and delay caused by centralized feedback of the service data to the service control network element can be avoided, transmission delay is shortened, and transmission and computing overheads of the service control network element are reduced.

It should be understood that, in the method and the possible implementations of the first aspect, the first request corresponds to a request #1 in a specific implementation part of this application, the second request corresponds to a request #2 in the specific implementation part of this application, the first data corresponds to data #2 in the specific implementation part of this application, and second data corresponds to data #1 in the specific implementation part of this application.

In a possible implementation, the first request includes service type information and/or area information.

In this implementation, the first computing network element may be properly selected based on the service type information and/or the area information, to further improve service performance.

In a possible implementation, the service control network element may determine the first computing network element based on the first request and first information of at least one computing network element, where the first information includes at least one of service type information, location information, and computing resource information.

In this implementation, the service control network element may properly determine the first computing network element based on the first request and the first information of the computing network element.

In a possible implementation, the service control network element receives the first information from the computing network element.

In this implementation, the first information of the computing network element obtained by the service control network element may be from each computing network element. For example, the computing network element may send the first information to the service control network element by using a registration message, to support the service control network element in managing and selecting the computing network element.

In a possible implementation, the service control network element may send a second request to a computing control network element based on the first request, where the second request corresponds to the first service, and the second request is for requesting the information about the first computing network element, or the second request may be used to obtain the information about the first computing network element. The service control network element may further receive the information about the first computing network element from the computing control network element.

In this implementation, the service control network element may send the second request to the computing control network element based on the first request of a service demander (namely, the first device). Therefore, the computing control network element may select the first computing network element based on the second request, to further reduce a processing load of the service control network element.

In a possible implementation, the second request further includes a first identifier, and the first identifier corresponds to the first service.

In embodiments of this application, the first identifier may identify the first service. For example, when being sent together with data, the first identifier may identify that the data belongs to the first service. When being sent together with a message or information in this application, the first identifier identifies that the message or the information is associated with the first service. Therefore, communication reliability and communication efficiency can be improved.

In a possible implementation, the service control network element may send the information about the first computing network element to the first device; the service control network element sends information about the first device to the first computing network element; or the service control network element receives the first data from the first computing network element, and sends the first data to the first device.

Based on this implementation, the first computing network element may be supported in flexibly sending the first data of the first service, to further shorten service delay.

In a possible implementation, the service control network element may further send second information to the first computing network element, where the second information indicates a condition for the computing network element to send the first data.

Based on this implementation, the first computing network element may be supported in flexibly sending the first data of the first service based on a specific periodicity or a trigger event.

In a possible implementation, the information about the first computing network element includes first address information, where the first address information is used to receive second data of the first service, and the second data is used to generate the first data; and/or the information about the first computing network element includes an identifier of the first computing network element.

Based on this implementation, flexible indication of the first computing network element can be implemented. When the information about the first computing network element includes the first address information, the first computing network element may be supported in identifying, based on first address information of received data, that the data belongs to the first service, to improve communication efficiency and reliability.

In a possible implementation, the information about the first computing network element includes the first address information, and the service control network element receives the first address information from the first computing network element; or the service control network element receives a first correspondence from the first computing network element, where the first correspondence includes a correspondence between the service type information and address information, the service type information includes service type information of the first service, and the address information includes the first address information.

Based on this implementation, the service control network element may receive the first address information allocated by the first computing network element, or may receive the correspondence between the address information of the first computing network element and the service type information, and determine, based on the correspondence, the first address information corresponding to the first service, to flexibly determine the first address information.

In a possible implementation, the service control network element sends the service type information of the first service to the first computing network element, or sends the service type information of the first service and the first identifier, where the first identifier corresponds to the first service.

Optionally, in this application, that the service control network element sends the service type information of the first service to the first computing network element, or sends the service type information of the first service and the first identifier may be replaced with that the service control network element sends third information to the first computing network element, where the third information includes at least one of the following: the service type information of the first service, or the service type information of the first service and the first identifier.

Based on this implementation, the service control network element may send the service type information of the first service to the first computing network element, or send the service type information of the first service and the first identifier. The service type information of the first service may correspond to the first address information, so that the first computing network element learns that the first address information is used to receive the second data of the first service. In addition, when the service type information of the first service and the first identifier are sent together, the first computing network element may learn of a correspondence between the first identifier and the first service.

In a possible implementation, the service control network element may further send the first identifier to the access network device and/or the first device, where the first identifier corresponds to the first service.

Based on this implementation, the service control network element may send the first identifier to the access network device and/or the first device, so that the first access network device and/or the first device learn of the correspondence between the first identifier and the first service. Therefore, when receiving data sent together with the first identifier, the access network device and/or the first device can identify that the data is the data of the first service.

According to a second aspect, an embodiment of this application provides a communication method. The communication method may be implemented by a computing control network element or a component in the computing control network element, and the component is at least one of a processor, a transceiver, a processing module, or a transceiver module. For a sensing service, the computing control network element may include a computing control function (computing control NF, CCF) network element. An example in which an execution body is the computing control network element is used. The method includes: The computing control network element receives a first request from a service control network element, where the first request corresponds to a first service, and the first request is for requesting information about a first computing network element, or the first request is used to obtain the information about the first computing network element, and the first computing network element is configured to generate first data of the first service. The computing control network element determines the first computing network element based on the first request. The computing control network element sends the information about the first computing network element to the service control network element.

It should be understood that, in the method and the possible implementations of the second aspect, the first request corresponds to a request #2 in a specific implementation part of this application, the second request corresponds to a request #1 in the specific implementation part of this application, the first data corresponds to data #2 in the specific implementation part of this application, and second data corresponds to data #1 in the specific implementation part of this application.

In this implementation, the computing control network element may determine the first computing network element based on the first request, so that the computing control network element properly selects the first computing network element based on the first request, to shorten service delay.

In a possible implementation, the first request includes service type information and/or area information. The computing control network element may further determine the first computing network element based on the first request and first information of at least one computing network element, where the first information includes at least one of service type information, location information, and computing resource information.

In this implementation, the computing control network element may properly determine the first computing network element based on the first request and the first information of the computing network element.

In a possible implementation, the computing control network element may further receive the first information from the computing network element.

In this implementation, first information of each computing network element obtained by the computing control network element may be from the computing network element. For example, the computing network element may send the first information to the computing control network element by using a registration message, to support the computing control network element in managing and selecting the computing network element.

In a possible implementation, the computing control network element may further send information about the service control network element to the first computing network element.

In this implementation, the computing control network element may send the information about the service control network element to the first computing network element, to support the first computing network element in sending the first data to a first device via the service control network element, so that flexibility of sending the first data of the first service is improved, thereby shortening service delay.

In a possible implementation, the computing control network element sends second information to the first computing network element, where the second information indicates a condition for the computing network element to send the first data.

In a possible implementation, the information about the first computing network element includes first address information, where the first address information is used to receive second data of the first service, and the second data is used to generate the first data; and/or an identifier of the first computing network element.

Based on this implementation, flexible indication of the first computing network element can be implemented. When the information about the first computing network element includes the first address information, the first computing network element may be supported in identifying, based on first address information of received data, that the data belongs to the first service, to improve communication efficiency and reliability.

In a possible implementation, the computing control network element may further receive the first address information from the first computing network element. Alternatively, the computing control network element receives a first correspondence from the first computing network element, where the first correspondence includes a correspondence between the service type information and address information, the service type information includes service type information of the first service, and the address information includes the first address information.

Based on this implementation, the computing control network element may receive the first address information allocated by the first computing network element, or may receive the correspondence between the address information of the first computing network element and the service type information, and determine, based on the correspondence, the first address information corresponding to the first service, to flexibly determine the first address information.

In a possible implementation, the computing control network element may further send the service type information of the first service to the first computing network element, or may further send the service type information of the first service and a first identifier to the first computing network element, where the first identifier corresponds to the first service. Alternatively, the computing control network element may further send third information to the first computing network element, where the third information includes at least one of the following: the service type information of the first service, or the service type information of the first service and a first identifier.

Based on this implementation, the computing control network element may send the service type information of the first service to the first computing network element, or send the service type information of the first service and the first identifier. The service type information of the first service may correspond to the first address information, so that the first computing network element learns that the first address information is used to receive the second data of the first service. In addition, when the service type information of the first service and the first identifier are sent together, the first computing network element may learn of a correspondence between the first identifier and the first service.

In a possible implementation, the first request further includes the first identifier, and the first identifier corresponds to the first service.

Based on this implementation, the computing control network element may receive the first identifier from the service control network element. For example, the first identifier may be allocated by the service control network element.

According to a third aspect, an embodiment of this application provides a communication method. The communication method may be implemented by a computing network element or a component in the computing network element, and the component is at least one of a processor, a transceiver, a processing module, or a transceiver module. For a sensing service, the computing network element may include a computing function (computing NF, CF) network element. An example in which an execution body is the computing network element is used. The method includes: The computing network element generates first information, where the first information includes at least one of service type information, location information, and computing resource information. The computing network element sends the first information to a computing control network element or a service control network element.

It should be understood that, in the method and the possible implementations of the third aspect, first data corresponds to data #1 described in a specific implementation part of this application, and second data corresponds to data #2 described in the specific implementation part of this application.

According to the method, the computing network element may generate and send the first information to the computing control network element or the service control network element, to support the computing control network element or the service control network element in selecting, based on the first information, a computing network element to execute a particular service. This can improve reasonableness of selecting the computing network element, and shorten service delay.

In a possible implementation, the computing network element may further receive first data of a first service. The computing network element generates second data of the first service based on the first data. The computing network element sends the second data.

According to the method, the computing network element may receive the first data of the first service, generate the second data based on the first data, and then send the second data, to implement generation and sending of the second data.

In a possible implementation, the computing network element receives a first request from a first device, where the first request is for requesting the second data; and the computing network element sends the second data to the first device based on the first request. Alternatively, the computing network element receives information about a first device from the computing control network element or the service control network element; and the computing network element sends the second data to the first device based on the information about the first device. Alternatively, the computing network element receives information about the service control network element from the computing control network element; and the computing network element sends the second data to the service control network element.

Based on the foregoing implementation, the computing network element may flexibly send the second data, to further shorten service delay.

In a possible implementation, the computing network element may receive second information from the computing control network element or the service control network element, where the second information indicates a condition for the computing network element to send the second data. The computing network element sends the second data based on the second information.

Based on this implementation, the first computing network element may be supported in flexibly sending the second data of the first service based on a specific periodicity or a trigger event.

In a possible implementation, the computing network element receives the first data by using first address information, where the first address information corresponds to service type information of the first service.

Based on this implementation, the first computing network element may be supported in identifying, based on the first address information for receiving the first data, that the first data belongs to the first service, and generating the second data in a corresponding data computing manner or processing manner, to improve communication efficiency and reliability.

In a possible implementation, the computing network element sends the first address information to the computing control network element or the service control network element. Alternatively, the computing network element sends a first correspondence to the computing control network element or the service control network element, where the first correspondence includes a correspondence between the service type information and address information, the service type information includes the service type information of the first service, and the address information includes the first address information.

Based on this implementation, the first address information can be indicated by the computing network element to the computing control network element or the service control network element, so that the first address information is flexibly determined.

In a possible implementation, the computing network element may receive the first address information. Alternatively, the computing network element receives a first correspondence, where the first correspondence includes a correspondence between the service type information and address information, the service type information includes the service type information of the first service, and the address information includes the first address information.

Based on this implementation, the first address information can be indicated by the computing control network element or the service control network element to the computing network element, so that the first address information is flexibly determined.

In a possible implementation, the computing network element receives third information from the computing control network element or the service control network element, where the third information includes at least one of the following: the service type information of the first service, or the service type information of the first service and a first identifier, where the first identifier corresponds to the first service.

Based on this implementation, the computing network element may obtain, based on the indication of the computing control network element or the service control network element, a correspondence between the first address information and the service type information of the first service, or obtain a correspondence between the service type information of the first service and the first identifier, so that the computing network element flexibly and efficiently identifies a service type to which the data belongs, thereby shortening service delay.

In a possible implementation, receiving, by the computing network element, the first data and the first identifier, where the first identifier corresponds to the first service.

Based on this implementation, the computing network element may be indicated to identify, as the first data of the first service based on the first identifier, the data sent together with the first identifier, that is, flexibly and efficiently identify the service to which the data belongs, so that service delay can be further shortened.

According to a fourth aspect, an embodiment of this application provides a communication method. The communication method may be implemented by an access network device or a component in the access network device, and the component is at least one of a processor, a transceiver, a processing module, or a transceiver module. The access network device may include a base station. An example in which an execution body is the base station is used. The method includes: The access network device receives, from a computing control network element or a service control network element, information about a first computing network element and control information corresponding to a first service. The access network device sends first data of the first service to the first computing network element.

It should be understood that, in the method and the possible implementations of the fourth aspect, first data corresponds to data #1 described in a specific implementation part of this application, and second data corresponds to data #2 described in the specific implementation part of this application.

According to the method, the access network device may send the first data of the first service to the first computing network element based on the information about the first computing network element, and the first computing network element may be configured to generate the second data of the first service based on the first data.

Optionally, the first data of the first service may be obtained based on control information corresponding to the first service.

In a possible implementation, the access network device receives a first identifier from the computing control network element or the service control network element, where the first identifier is related to the first service. The access network device may send the first data of the first service and the first identifier to the first computing network element.

Based on this implementation, the access network device may send the first identifier while sending the first data, to indicate that the first data is data of the first service.

In a possible implementation, the information about the first computing network element includes first address information of the first computing network element, and the first address information is used to send the first data of the first service. The access network device may send the second data to the first computing network element based on the first address information.

Based on this implementation, the access network device may send the first data based on the first address information of the first computing network element, to indicate that the first data is the data of the first service.

According to a fifth aspect, this application further provides a communication apparatus. The communication apparatus may be a service control network element or a component in the service control network element. The communication apparatus has a function of implementing the method in the first aspect or the possible implementations of the first aspect. The function may be implemented by hardware, or may be implemented by hardware executing corresponding software. The hardware or the software includes one or more modules corresponding to the foregoing function.

In a possible implementation, a structure of the communication apparatus includes a communication module and a processing module. These modules or units may perform the corresponding function in the first aspect or the possible implementations of the first aspect. For details, refer to detailed descriptions in the method example. Details are not described herein again.

In a possible implementation, a structure of the communication apparatus includes a communication interface and a processor. Optionally, the communication apparatus further includes a memory. The communication interface is configured to: receive and send information or data, and is configured to: communicate and interact with another device in a communication network. The processor is configured to support the communication apparatus in performing the corresponding function in the first aspect or the possible implementations of the first aspect. The memory is coupled to the processor, and stores program instructions and data that are necessary for the communication apparatus.

According to a sixth aspect, this application further provides a communication apparatus. The communication apparatus may be a computing control network element or a component in the computing control network element. The communication apparatus has a function of implementing the method in the second aspect or the possible implementations of the second aspect. The function may be implemented by hardware, or may be implemented by hardware executing corresponding software. The hardware or the software includes one or more modules corresponding to the foregoing function.

In a possible implementation, a structure of the communication apparatus includes a communication module and a processing module. These modules or units may perform the corresponding function in the second aspect or the possible implementations of the second aspect. For details, refer to detailed descriptions in the method example. Details are not described herein again.

In a possible implementation, a structure of the communication apparatus includes a communication interface and a processor. Optionally, the communication apparatus further includes a memory. The communication interface is configured to: receive and send information or data, and is configured to: communicate and interact with another device in a communication network. The processor is configured to support the communication apparatus in performing the corresponding function in the second aspect or the possible implementations of the second aspect. The memory is coupled to the processor, and stores program instructions and data that are necessary for the communication apparatus.

According to a seventh aspect, this application further provides a communication apparatus. The communication apparatus may be a computing network element or a component in the computing network element. The communication apparatus has a function of implementing the method in the third aspect or the possible implementations of the third aspect. The function may be implemented by hardware, or may be implemented by hardware executing corresponding software. The hardware or the software includes one or more modules corresponding to the foregoing function.

In a possible implementation, a structure of the communication apparatus includes a communication module and a processing module. These modules or units may perform the corresponding function in the third aspect or the possible implementation examples of the third aspect. For details, refer to detailed descriptions in the method example. Details are not described herein again.

In a possible implementation, a structure of the communication apparatus includes a communication interface and a processor. Optionally, the communication apparatus further includes a memory. The communication interface is configured to: receive and send information or data, and is configured to: communicate and interact with another device in a communication network. The processor is configured to support the communication apparatus in performing the corresponding function in the third aspect or the possible implementation examples of the third aspect. The memory is coupled to the processor, and stores program instructions and data that are necessary for the communication apparatus.

According to an eighth aspect, this application further provides a communication apparatus. The communication apparatus may be an access network device or a component in the access network device. The communication apparatus has a function of implementing the method in the fourth aspect or the possible implementations of the fourth aspect. The function may be implemented by hardware, or may be implemented by hardware executing corresponding software. The hardware or the software includes one or more modules corresponding to the foregoing function.

In a possible implementation, a structure of the communication apparatus includes a communication module and a processing module. These modules or units may perform the corresponding function in the fourth aspect or the possible implementation examples of the fourth aspect. For details, refer to detailed descriptions in the method example. Details are not described herein again.

In a possible implementation, a structure of the communication apparatus includes a communication interface and a processor. Optionally, the communication apparatus further includes a memory. The communication interface is configured to: receive and send information or data, and is configured to: communicate and interact with another device in a communication network. The processor is configured to support the communication apparatus in performing the corresponding function in the fourth aspect or the possible implementation examples of the fourth aspect. The memory is coupled to the processor, and stores program instructions and data that are necessary for the communication apparatus.

According to a ninth aspect, an embodiment of this application provides a communication system, which may include the communication apparatuses according to the fifth aspect and the seventh aspect.

In a possible implementation, the communication system further includes the communication apparatus according to the sixth aspect.

In a possible implementation, the communication system further includes the communication apparatus according to the eighth aspect.

According to a tenth aspect, an embodiment of this application provides a computer-readable storage medium. The computer-readable storage medium stores program instructions, and when the program instructions are run on a computer, the computer is enabled to perform the method according to any one of the first aspect to the fourth aspect and the possible implementations of the first aspect to the fourth aspect in embodiments of this application. For example, the computer-readable storage medium may be any usable medium that can be accessed by the computer. By way of example rather than limitation, the computer-readable medium may include a non-transient computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can be used to carry or store expected program code in a form of instructions or a data structure and that can be accessed by the computer.

According to an eleventh aspect, an embodiment of this application provides a computer program product, including computer program code or instructions. When the computer program code or the instructions are run on a computer, the method according to any one of the first aspect to the fourth aspect or the possible implementations of the first aspect to the fourth aspect is performed.

According to a twelfth aspect, this application further provides a chip, including a processor. The processor is coupled to a memory, and is configured to: read and execute program instructions stored in the memory, so that the chip implements the method according to any one of the first aspect to the fourth aspect or the possible implementations of the first aspect to the fourth aspect.

For each aspect of the fifth aspect to the twelfth aspect and technical effects that may be achieved in each aspect, refer to descriptions of beneficial effects of the method according to any one of the first aspect to the fourth aspect and the possible implementations of the first aspect to the fourth aspect. Details are not described herein again.

### BRIEF DESCRIPTION OF DRAWINGS

FIG. 1 is an architectural diagram of a communication system according to an embodiment of this application;
FIG. 2 is an architectural diagram of another communication system according to an embodiment of this application;
FIG. 3 is an architectural diagram of a sensing service scenario according to an embodiment of this application;
FIG. 4 is an architectural diagram of another sensing service scenario according to an embodiment of this application;
FIG. 5 is a schematic flowchart of a communication method according to an embodiment of this application;
FIG. 6 is an architectural diagram of another communication system according to an embodiment of this application;
FIG. 7 is a schematic flowchart of another communication method according to an embodiment of this application;
FIG. 8 is an architectural diagram of another communication system according to an embodiment of this application;
FIG. 9 is a schematic flowchart of another communication method according to an embodiment of this application;
FIG. 10 is an architectural diagram of another communication method according to an embodiment of this application;
FIG. 11 is a structural diagram of a communication apparatus according to an embodiment of this application; and
FIG. 12 is a structural diagram of another communication apparatus according to an embodiment of this application.

### DESCRIPTION OF EMBODIMENTS

To make the objectives, technical solutions, and advantages of this application clearer, the following further describes this application in detail with reference to the accompanying drawings.

To facilitate understanding of the technical solutions in this application, the following first briefly describes technical terms in this application.

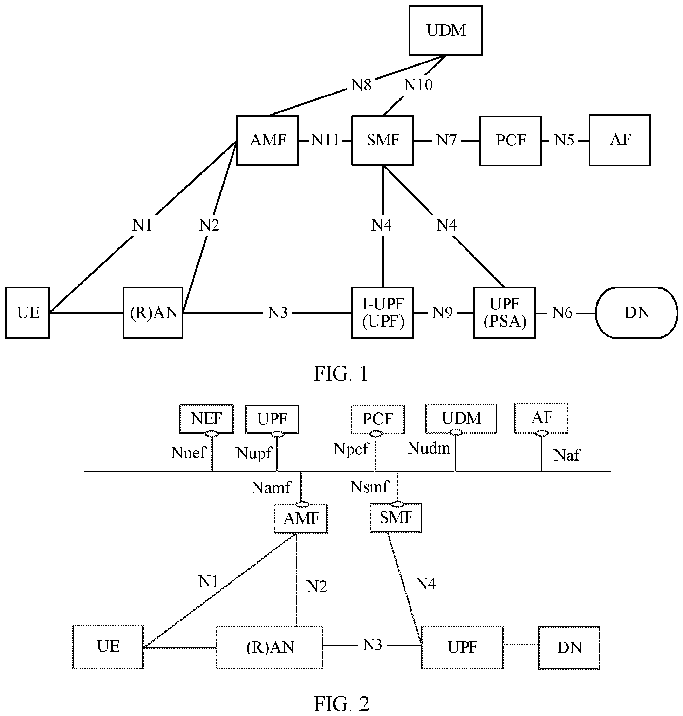

FIG. 1 and FIG. 2 are diagrams of 5th generation (5th generation, 5G) network architectures. FIG. 1 is a diagram of a 5G network architecture that is based on a non-service-based architecture. FIG. 2 is a diagram of a 5G network architecture that is based on a service-based architecture (service-based architecture, SBA). The service-based architecture is a basic architecture of a 5G network. Servitization is mainly implemented on a control plane. According to three principles of "self-containing, reusability, and independent management", the essence of the SBA is to define network functions as several "service" modules that can be flexibly invoked. Based on this, an operator can flexibly customize networking based on a service requirement. Interaction between the network functions is implemented through service invoking. Each network function externally presents a common service-based interface, which can be invoked by an authorized network function or service. FIG. 2 is a diagram of an example of a service-based architecture of a 5G network. In the architecture, a core network element may communicate with another core network element through a service-based interface.

The 5G network architectures shown in FIG. 1 and FIG. 2 may include three parts: a terminal, a data network (data network, DN), and an operator network. The following briefly describes functions of some network elements in the 5G network architecture.

The operator network may include but is not limited to one or more of the following network elements: a network exposure function (network exposure function, NEF) network element (not shown in FIG. 1), a policy control function (policy control function, PCF) network element, a unified data management (unified data management, UDM) network element, an application function (application function, AF) network element, an AMF network element, an SMF network element, a (radio) access network ((radio) access network, (R)AN) device, a user plane function (user plane function, UPF) network element, a network repository function (network repository function, NRF) network element (not shown in FIG. 1 and FIG. 2), a unified data repository (unified data repository, UDR) function network element (not shown in FIG. 1 and FIG. 2), or a network data analytics function (network data analytics function, NWDAF) network element (not shown in FIG. 1 and FIG. 2). In the operator network, a network element or a device other than the radio access network device may be referred to as a core network element or a core network device.

A (R)AN includes the radio access network device. The radio access network device may be a base station (base station), an evolved NodeB (evolved NodeB, eNodeB/eNB), a transmission reception point (transmission reception point, TRP), a next generation radio access network (next generation RAN, NG RAN) device, a next generation NodeB (next generation NodeB, gNB) in a 5G mobile communication system, a base station in a 6th generation (6th generation, 6G) mobile communication system, a base station in a future mobile communication system, an access node in a wireless fidelity (wireless fidelity, Wi-Fi) system, or the like; or may be a module or a unit that completes some functions of a base station, for example, may be a central unit (central unit, CU) or a distributed unit (distributed unit, DU). The radio access network device may be a macro base station, may be a micro base station or an indoor base station, or may be a relay node, a donor node, or the like. A specific technology and a specific device form that are used by the radio access network device are not limited in embodiments of this application. In embodiments of this application, an example in which the base station is used as the radio access network device is used for description. The radio access network device in this application may be replaced with an access network device.

In this application, the access network device includes but is not limited to a gNB, an eNodeB/eNB, a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a TRP, a transmission point (transmission point, TP), a mobile switching center, a small cell, a pico cell, or a 5G gateway. Alternatively, the network device may be a radio controller, a central unit (central unit, CU), and/or a distributed unit (distributed unit, DU) in a cloud radio access network (cloud radio access network, CRAN) scenario, or the network device may be a relay station, an access point, a vehicle-mounted device, a terminal, a wearable device, a network device in future mobile communication, a network device in a future evolved public land mobile network (public land mobile network, PLMN), or the like.

The terminal is a device having a wireless transceiver function, and may communicate with one or more core network (core network, CN) devices (or may also be referred to as core devices) via an access network device (or may also be referred to as an access device) in a radio access network (radio access network, RAN). In this application, the terminal may also be referred to as a terminal device, a user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, remote medical, a smart grid, smart furniture, a smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in embodiments of this application, and any one of the foregoing implementations may be used. For example, the user equipment may be a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. A type, a category, or the like of the terminal device is not limited in embodiments of this application. If the network device is a radio access network such as a base station, the UE may be connected to the network device through a radio air interface (or referred to as a Uu interface). The terminal may further include a terminal side device, such as a local switch (local switch, LSW) and/or a customer premise equipment (customer premise equipment, CPE), or the user equipment may access a network via the LSW or the CPE.

The base station and the terminal may be fixed or movable. The base station and the terminal may be deployed on the land, including an indoor or outdoor device, a handheld device, or a vehicle-mounted device; or may be deployed on a water surface; or may be deployed on an airplane, a balloon, or an artificial satellite in the air. Application scenarios of the base station and the terminal are not limited in embodiments of this application.

The following describes some network elements shown in FIG. 1 and FIG. 2.

An NEF network element, which may be referred to as an NEF for short in this application, may support secure interaction between a 3GPP network and a third-party application (or a device).

An AF network element, which may be referred to as an AF for short in this application, may be configured to: interact with a 3GPP core network to provide a service, for example, affect data routing decision-making and a policy control function, or provide some third-party services for a network side. For example, the AF network element may be configured to transfer a requirement of an application side (for example, an enterprise in a toB scenario) for the network side. The requirement herein is, for example, a quality of service (quality of service, QoS) requirement, a user status event subscription, or a planning requirement for a 5G LAN group. The AF may be a third-party function entity, or may be an application service deployed by an operator, for example, an internet protocol (internet protocol, IP) multimedia subsystem (IP multimedia subsystem, IMS) voice call service. When interacting with a core network, an application function entity of the third-party application may further perform authorization processing via the NEF. For example, the third-party application function directly sends a request to the NEF, and the NEF determines whether the AF is allowed to send the request. If verification succeeds, the NEF forwards the request to a corresponding PCF or UDM.

A UDM network element, which may be referred to as a UDM for short in this application, may be responsible for subscription data management of the UE, including storage and management of a UE identifier, access authorization of the UE, and the like.

A PCF network element, which may be referred to as a PCF for short in this application, is mainly responsible for policy control decision-making, and providing a policy rule for a control plane function and a traffic-based charging control function.

An AMF network element, which may be referred to as an AMF for short in this application, mainly performs functions such as mobility management and access authentication/authorization on the UE. In addition, the AMF network element is further responsible for transferring a user policy between the UE and the PCF.

The SMF network element, which may be referred to as an SMF in this application for short, mainly performs functions on the UE such as packet data unit (packet data unit, PDU) session (session) management, execution of a control policy delivered by the PCF, UPF selection, and allocation of an IP address to the UE in a case of a PDU type being an IP type.

AUPF network element, which may be referred to as a UPF for short in this application, is used as an interface to the data network. The UPF is responsible for forwarding and receiving user data in the terminal device. The UPF may receive user data from the data network, and transmit the user data to the terminal device via the access network device; or the UPF may receive user data from the terminal device via the access network device, and forward the user data to the data network. A transmission resource and a scheduling function that are used by the UPF to provide services for the terminal device are managed and controlled by the SMF network element. The UPF may be used as a PDU session anchor (PDU session anchor, PSA) or an intermediate UPF (I-UPF).

An NRF network element, which may be referred to as an NRF for short, may be configured to support registration and discovery of network functions.

A UDR network element, which may be referred to as a UDR for short in this application, may be configured to store and obtain subscription data used by the UDM and the PCF.

An NWDAF network element, which may be referred to as an NWDAF for short in this application, may be configured to support data collection from another network function and the AF, may further support data collection from an operations, administration, and maintenance (operations, administration, and maintenance, OAM) system, and may further support provision of analysis information for the another network function such as the AF.

The DN is a network located outside the operator network. A plurality of DNs can access the operator network, and a plurality of services may be deployed on the DN, to provide a data service, a voice service, and/or the like for the terminal. For example, the DN is a private network of an intelligent factory, a sensor installed in a workshop of the intelligent factory may be the terminal, a control server of the sensor is deployed in the DN, and the control server may provide a service for the sensor. The sensor may communicate with the control server, to obtain instructions of the control server, transmit collected sensor data to the control server based on the instructions, and so on. For another example, the DN is an internal office network of a company, a mobile phone or a computer of an employee in the company may be the terminal, and the mobile phone or the computer of the employee can access information, a data resource, or the like on the internal office network of the company.

It should be understood that the core network element in this application may have another name in another communication system other than the 5G system. Names of the foregoing network elements are not specifically limited in this application.

In addition, some communication interfaces shown in FIG. 1 are as follows.

An N1 interface is a signaling-plane interface between the AMF and the UE, and is configured to exchange a signaling message between the core network and the UE. For example, the UE is registered with the network, the UE establishes a PDU session, and the network side configures a policy for the UE.

An N2 interface is an interface between the AMF and the RAN, and is configured to transfer radio bearer control information from a core network side to the RAN.

An N3 interface is an interface between the (R)AN and the UPF, and is configured to transfer UE service data between the RAN and the UPF.

An N4 interface is an interface between the SMF and the UPF, and is configured to transfer information between a control plane and a user plane, for example, used by a control plane terminal device to complete a network access operation based on subscription information of an operator.

An N5 interface is an interface between two UPFs. For example, as shown in FIG. 1, an N9 interface may be an interface between the 1-UPF and the PSA.

An N6 interface is an interface between the UPF and the DN, and is configured to transfer UE service data between the UPF and the DN.

An N7 interface is an interface between the PCF and the SMF, and is configured to deliver a PDU session granularity and a service data flow granularity control policy.

An N8 interface is an interface between the AMF and the UDM, and is used by the AMF to obtain access and mobility management-related subscription data and authentication data from the UDM, and used by the AMF to register current mobility management-related information of the UE with the UDM.

The N9 interface is the interface between the I-UPF and the PSA.

An N10 interface is an interface between the SMF and the UDM, and is used by the SMF to obtain session management-related subscription data from the UDM, and used by the SMF to register current session-related information of the UE with the UDM.

An N11 interface is an interface between the SMF and the AMF, and is configured to transfer PDU session tunnel information between the RAN and the UPF, a control message sent to the UE, radio resource control information sent to the RAN, and the like.

In addition, some communication interfaces shown in FIG. 2: Nnef, Nupf, Npcf, Nudm, Naf, Namf and Nsmf are respectively service-based interfaces provided by the foregoing NEF, UPF, PCF, UDM, AF, AMF, and SMF, and are used to invoke corresponding service-based operations.

It may be understood that the foregoing network elements or functions may be network elements in a hardware device, may be software functions running on dedicated hardware, or may be virtualized functions instantiated on a platform (for example, a cloud platform). Optionally, the foregoing network elements or functions may be implemented by one device, or may be jointly implemented by a plurality of devices, or may be implemented by one functional module in one device. This is not specifically limited in embodiments of this application.

A session management network element, a user plane network element, and a mobility management network element in this application may be respectively the SMF, the UPF, and the AMF in FIG. 1, or may be network elements having functions of the SMF, the UPF, and the AMF in a future communication network such as a 6th generation (6th generation, 6G) network. This is not limited in this application. In embodiments of this application, an example in which the SMF, the UPF, and the AMF are respectively used as the session management network element, the user plane network element, and the mobility management network element is used for description.

The following uses network elements in a 5G system as an example to describe specific solution details. It may be understood that, when this solution is applied to an LTE system or a future communication system, each network element in the solution may be replaced with another network element having a corresponding function. This is not limited in this application.

In addition, the operator network (or the core network) in this application may further include a sensing function (sensing function, SF) network element (briefly referred to as a sensing network element), and the sensing network element may perform radio sensing by using the base station or the terminal to implement a sensing service. The sensing network element may also be referred to as a sensing control network element (sensing control function, SCF) (which may be referred to as an SCF for short). Optionally, the sensing network element may alternatively be deployed in a non-core network. This is not limited in this application.

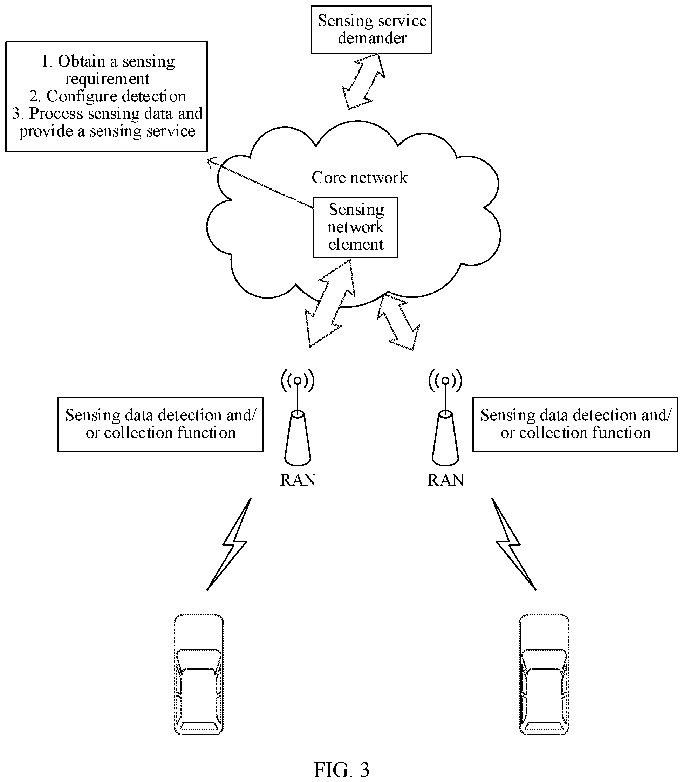

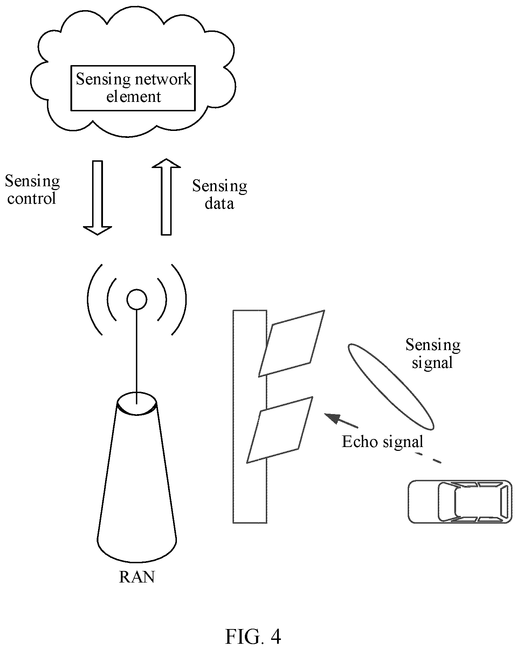

As shown in FIG. 3, the sensing network element may obtain a sensing requirement based on an internal network requirement or a requirement of a sensing service demander (for example, an AF or a third-party device). The sensing service demander is, for example, the AF, an external application server (application server, AS), or a terminal device. After obtaining the sensing requirement, the sensing network element may control a radio access network device (a RAN used as an example in FIG. 3) to detect and/or collect sensing data. The sensing network element may further configure detection performed by the radio access network device. For example, the radio access network device may perform a sensing operation to obtain the sensing data. The sensing operation may include sending a sensing signal and receiving an echo signal. The echo signal is a reflected signal of an object for the sensing signal. As shown in FIG. 4, the radio access network device may perform particular processing based on the echo signal to generate (or determine or obtain) the sensing data. After obtaining the sensing data through detection, the radio access network device provides the sensing data for the sensing network element, and the sensing network element provides a sensing service based on the sensing data. For example, the sensing network element may provide the sensing service for the demander. Alternatively, the sensing network element may perform optimization or the like on an internal network based on the sensing data.

It should be understood that the sensing network element in this application may also be replaced with a service network element. For a process in which the service network element controls the access network device to collect service data and provides a service, refer to this process in which the sensing network element controls the radio access network device to collect the sensing data and provides the sensing service.

The sensing service is used as an example. Currently, the service network element is mainly deployed in a core network as a core network element. Therefore, a distance between the service network element and an access network device is large, and transmission delay of the service data is high. As a result, service reliability is reduced. Especially, for the sensing service, an application scenario of the sensing service has a high requirement on accuracy of a sensing result, and the high transmission delay means that the accuracy of the sensing result is greatly reduced. This may lead to a serious result.

To shorten service delay in a service scenario in which the service network element participates, an embodiment of this application provides a communication method. For example, the method may be applied to an architecture in which a service control function is separated from a service data computing function.

The service control function may be implemented by a service control network element, and the service data computing function may be implemented by a computing network element. The service control network element may be deployed in a core network, or the service control network element may be a core network element or a control plane network element in the core network. In addition, the service control network element may alternatively be deployed at another location. For example, the service control network element does not belong to the core network element, or the service control network element may be a non-core network element. This is not specifically limited in this application. For example, for the sensing service, the service control network element may include a sensing and computing control function (sensing and computing control NF, SCCF) network element (which may be referred to as an SCCF for short), an SCF network element, or an SF network element. The service control network element may alternatively be an AMF network element or a PCF network element, that is, the AMF network element or the PCF network element implements the service control function.

The computing network element may be any entity having a computing or data processing capability, and a type of the computing network element may include a server or a terminal. The server may be an edge server (edge server) or an edge application server (edge application server, EAS). The server may be deployed by an operator, or may be deployed by a third party. For example, the computing network element may include a computing function (computing NF, CF) network element (which may be referred to as a CF for short). The computing network element may further include a UE having a computing capability.

Optionally, there may be a plurality of computing network elements. Therefore, the service control network element may be further configured to select a computing network element based on a service.

In this application, the sensing service is used as an example to describe specific solution details. It may be understood that, when this solution is applied to another service, a corresponding network element may be replaced with another network element that has a similar function and supports the corresponding service, and a corresponding information name or message name may be replaced with another name that has a similar function and supports the corresponding service. This is not limited in this application.

When a device that performs sensing is a terminal, the SF network element or the like may send control information to the terminal by using a base station, and the terminal may send sensing data to a demander by using the base station. In this application, an example in which a device that performs sensing is a base station is used to describe specific solution details. It may be understood that when the device that performs sensing is a terminal, this solution further includes: The base station sends the received control information to the terminal, and the base station receives sensing data from the terminal. Details are not described below.

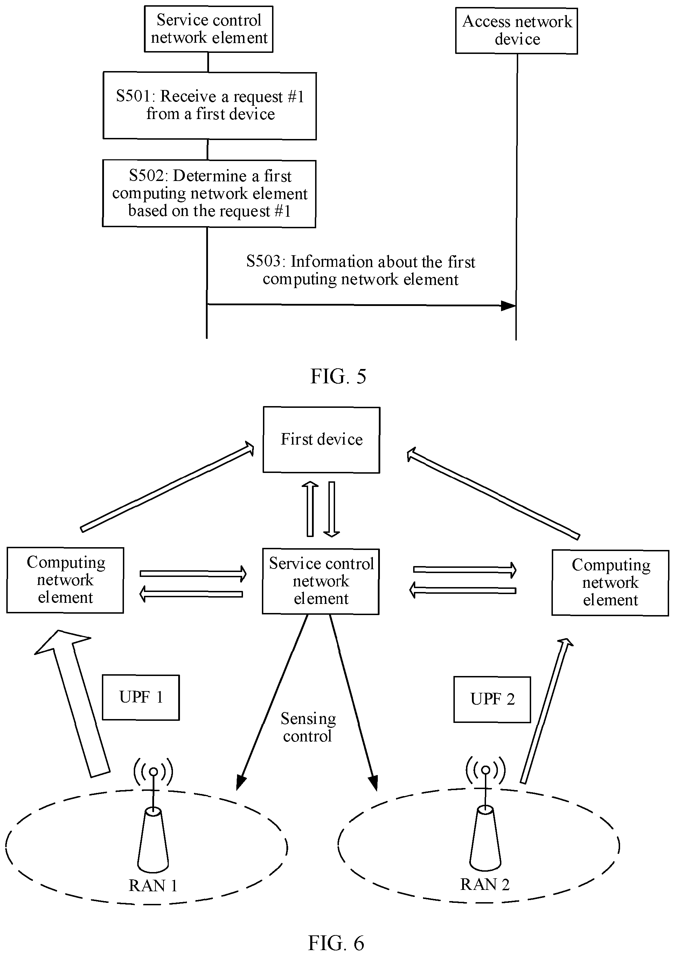

FIG. 5 is as an example. The communication method may include the following steps implemented by a service control network element, a computing network element, and an access network device.

S501: The service control network element receives a request #1 from a first device.

The first device may be a service demander (or a service demander device). For example, the first device may include an AF, a UE, or another network element. The first device may further include an application server.

The request #1 may include or may be a service request. For example, the request #1 may be for requesting a first service. Alternatively, the request #1 may be for requesting an operation related to a first service. Alternatively, the request #1 may be for requesting data (or referred to as service data) of a first service.

The first service in this application may be a sensing service or a data collection service.

In an example, the request #1 may include service type information and/or area information.

The service type may be a type of the first service. The service type is, for example, a sensing service type or a data collection service type. The sensing service type includes one or more of the following: object distribution, a map, driving, violation detection, object track tracking, emergency event detection, object positioning, an object contour size, an object speed, weather prediction, a human posture, human health, uncrewed aerial vehicle sensing, or vehicle sensing. The data collection service type includes one or more of the following: air interface quality information collection, terminal quantity information collection, and interference information collection.

For example, the service type information may include a sensing service type identifier, or may include an identifier corresponding to the sensing service, to indicate that the service type is the sensing service.

The area information may be an implementation area or an execution area of the first service, or may be an area in which a result of the first service is expected to be obtained. For example, for the sensing service, the area information may include an identifier or geographical location information of the area in which the demander expects to perform the sensing service. The area information may be geographical location information of an area, a 5G network tracking area (tracking area, TA), a data network access identifier (data network access identifier, DNAI), information about an access network device in the area (for example, geographical location information or an identifier of a base station), or the like. If the area information is the geographical location information, the service control network element may convert (or transform) the geographical location information into the TA or the information about the access network device.

In another example, the request #1 may further include service requirement information (or expressed as service description information). The service requirement information may indicate a requirement of the service demander for the first service, for example, a precision requirement, a feedback manner requirement, or a QoS requirement, and is determined based on a specific service. Optionally, the service type information and/or the area information may be included in the service requirement information.

In addition, the request #1 may include at least one of the service type information, the area information, and the service requirement information. It should be understood that, if the request #1 includes the service requirement information and the service type information, the service requirement information may not include the service type information. If the request #1 includes the service requirement information and the area information, the service requirement information may not include the area information.

S502: The service control network element determines a first computing network element based on the request #1.

S502 may alternatively be replaced with that the service control network element selects a first computing network element based on the request #1.

The first computing network element is configured to generate first data of the first service. Alternatively, the first computing network element is configured to determine or process data of the first service.

The first computing network element may be one of a plurality of computing network elements.

In a possible implementation of S502, the service control network element may determine the first computing network element based on the request #1 and first information of at least one computing network element, where the first information of the computing network element includes at least one of service type information of the computing network element, location information of the computing network element, and computing resource information of the computing network element. The first information of the computing network element may be configured in the service control network element; or the first information of the computing network element may be sent by the computing network element to the service control network element or a computing control network element; or the first information of the computing network element may be sent to another network element (such as an NEF), and the service control network element or the computing control network element obtains the first information of the computing network element from the another network element (such as the NEF).

The service type information of the computing network element may indicate a service type supported by the computing network element. In this application, the computing network element may process service data of the service type supported by the computing network element. For a specific type of the service type, refer to descriptions in this application. It should be understood that if the service type information supported by the computing network element includes the service type information in the request #1 of the first device, the computing network element supports the service type requested by the first device.

The location information of the computing network element may indicate a location of the computing network element. The location information may include, for example, a DNAI or a TA.

The computing resource information of the computing network element may indicate a busy/idle status and/or a computing capability of the computing network element. The busy/idle status of the computing network element may further indicate whether the computing network element is currently available for computation. For example, when the status is busy, it indicates that the computing network element is currently unavailable, or when the status is idle, it indicates that the computing network element is currently available. The computing resource information of the computing network element may further indicate a computing resource status of the computing network element, for example, an available computing resource of the computing network element.

Therefore, in this implementation, the service control network element may select the first computing network element from the at least one computing network element based on the service type information and/or the area information included in the request #1 and the at least one of the service type information, the location information, and the computing resource information of the at least one computing network element. For example, the service type information of the first computing network element may be included in the service type information included in the request #1; the location information of the first computing network element is included in the area information in the request #1, or a distance between the location information and the area information does not exceed a specified threshold; the busy/idle status of the first computing network element is idle; or a computing capability of the first computing network element meets a specific computing capability requirement, and the computing capability requirement may correspond to the first service.

In addition, the service control network element may alternatively determine the first computing network element based on a plurality of the service type information, the location information, and the computing resource information of the computing network element. For example, when two computing network elements both support the service type requested by the first device, the service control network element may select, as a first computing network element from the plurality of computing network elements, the computing network element whose location is closer to the area of the first service (in this application, for example, the implementation area or the execution area, or the area in which the first device expects to obtain the result of the first service). Alternatively, for another example, when two computing network elements both support the service type requested by the first device, the service control network element may preferentially select, as a first computing network element, the computing network element whose busy/idle status is idle. Alternatively, for another example, when two computing network elements both support the service type requested by the first device, the service control network element may preferentially select, as a first computing network element, the computing network element that can be configured to perform computation. Alternatively, for another example, when two computing network elements both support the service type requested by the first device, the service control network element may preferentially select a computing network element with more available computing resources as the first computing network element. Alternatively, for another example, when two computing network elements both support the service type requested by the first device, the service control network element may preferentially select a computing network element with a strong computing capability as the first computing network element.

Alternatively, for another example, when two computing network elements whose locations are close to the area of the first service and both support the service type requested by the first device, the service control network element may further select, as a first computing network element, the computing network element whose busy/idle status is idle, select a computing network element that can be configured to perform computation, or select a computing network element with more computing resources as the first computing network element, or select a computing network element with a strong computing capability as the first computing network element.

Based on the foregoing examples, in this application, the service control network element may alternatively determine the first computing network element in another arrangement and combination manner and based on the plurality of the service type information, the location information, and the computing resource information of the computing network element. Details are not described herein again.

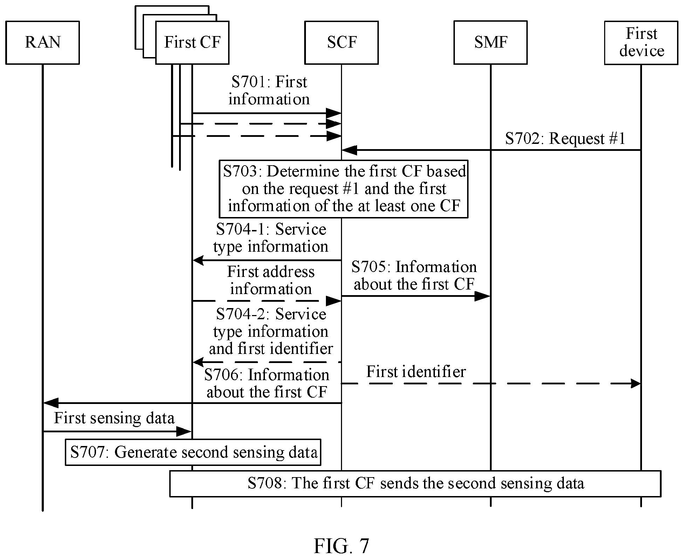

The following describes this implementation with reference to an architecture in FIG. 6 and a procedure in FIG. 7.

In a possible implementation of S502, the service control network element may send a request #2 to the computing control network element based on the request #1, and receive information about a first computing network element from the computing control network element. The first computing network element may be determined by the computing control network element based on the request #2, and therefore, the first computing network element may be determined. In addition, the request #2 corresponds to the first service, or the request #2 corresponds to the first service. That the request #2 corresponds to the first service herein may mean that the first computing network element determined based on the request #2 can support computation and/or processing of the data of the first service.

The request #2 may be for requesting or obtaining the information about the first computing network element. In embodiments of this application, the request #2 may be a computing request. For example, for the sensing service, the request #2 may be a sensing computing request.

The request #2 may include at least one of service type information, area information, or service requirement information.

In an example, that the service control network element may send a request #2 to the computing control network element based on the request #1 may be replaced with that the service control network element may determine a service type of the request #2 based on the service type of the request #1, and send the request #2 to the computing control network element, where service type information in the request #2 is the same as the service type information in the request #1. Alternatively, that the service control network element may send a request #2 to the computing control network element based on the request #1 may be replaced with that the service control network element may determine area information in the request #2 based on the area information in the request #1, and send the request #2 to the computing control network element, where the area information in the request #2 is the same as the area information in the request #1. Alternatively, that the service control network element may send a request #2 to the computing control network element based on the request #1 may be replaced with that the service control network element may determine service requirement information in the request #2 based on the service requirement information in the request #1, and send the request #2 to the computing control network element, where the service requirement information in the request #2 is the same as the service requirement information in the request #1.

For example, when the service control network element receives the request #1, where the request #1 includes the at least one of the service type information, the area information, or the service requirement information, the service control network element includes, in the request #2, some or all of the service type information, the area information, or the service requirement information included in the request #1.

In this example, the service control network element does not need to process the service type information, the area information, or the service requirement information in the request #1, to request the computing control network element to select the first computing network element based on the service type information, the area information, or the service requirement information. Therefore, processing difficulty of the service control network element can be reduced, and processing overheads can be reduced.

In another example, this application does not exclude that the service type information in the request #2 is determined based on the service type information in the request #1, and the two pieces of service type information are different. For example, to improve selection efficiency when the computing control network element selects the first computing network element, the service type information is added or deleted based on the service type information in the request #1.

In addition, this application does not exclude that the area information in the request #2 is determined based on the area information in the request #1, and the two pieces of area information are different. For example, when the area information in the request #1 received by the service control network element is the geographical location information, the service control network element may convert the geographical location information into the DNAI or the TA, and include the DNAI or the TA in the request #2. Alternatively, the service control network element may convert the geographical location information into the information about the base station, to include the geographical location information, the identifier, or the like of the base station in the request #2. The computing control network element can select the first computing network element more efficiently based on the DNAI, the TA, or the information about the base station.

Similarly, to improve selection efficiency, reduce selection difficulty, or the like when the computing control network element selects the first computing network element, this application does not exclude that the service control network element determines the service requirement information in the request #2 based on the service requirement information in the request #1, and the two pieces of service requirement information are different.

The first information of the computing network element includes the at least one of the service type information of the computing network element, the location information of the computing network element, and the computing resource information of the computing network element. For details, refer to descriptions in this application. The first information of the computing network element may be configured in the computing control network element, or the first information of the computing network element may be sent by the computing network element to the computing control network element.

It should be understood that the computing control network element may be configured to manage the computing network elements, for example, select a proper computing network element to process service data. For a manner of selecting the computing network element, refer to descriptions in this application. For example, the computing control network element may include a computing control function (computing control NF, CCF) network element. In addition, the computing control network element in this application may alternatively be an SMF network element or a PCF network element. That is, a computing control function is implemented in the SMF network element or the PCF network element.

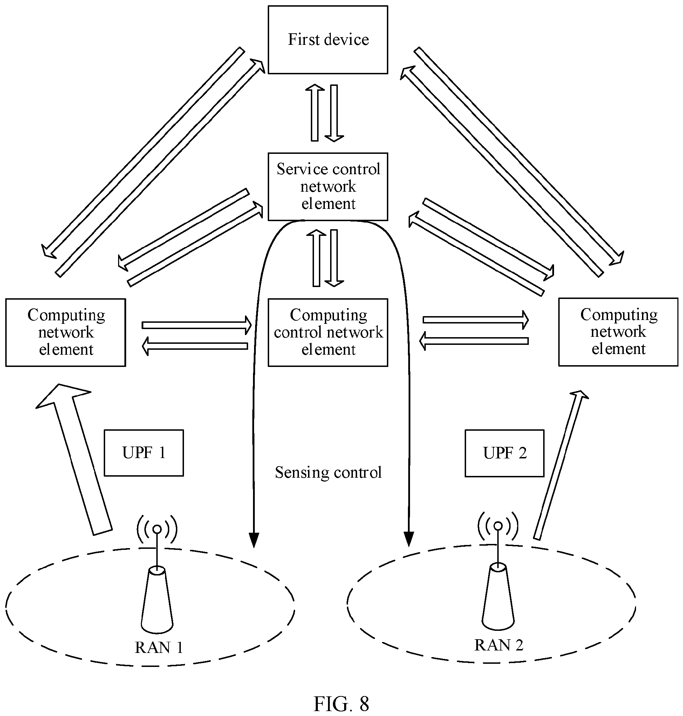

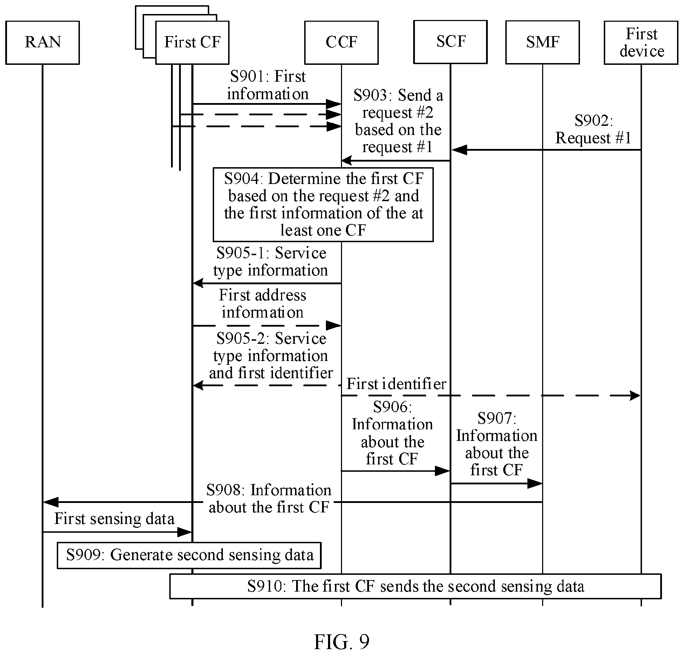

The following describes this implementation with reference to an architecture in FIG. 8 and a procedure in FIG. 9.

It should be understood that the first information in this application may be carried in a registration message of the computing network element, or the first information may be registration information. The registration message or the registration information may be used by the computing network element to register with the service control network element and/or the computing control network element. The registration herein means that the computing network element sends the information about the computing network element and/or the first information to the service control network element and/or the computing control network element, so that the service control network element and/or the computing control network element learn/learns of existence of the computing network element, and/or the service control network element and/or the computing control network element may select the first computing network element based on the first information.

Optionally, the first information or the registration message may further include an identifier and/or address information of the computing network element. In this application, the address information of the network element or the device may be an IP address of the network element or the device, or may be a combination of an IP address and a port number.

For example, the first information or the registration message may include a correspondence (which may be referred to as a first correspondence) between the service type information and the address information that are of the computing network element. The computing network element in this application may have a plurality of addresses, each piece of address information may indicate one address, and each piece of address information may correspond to one service type.

If a correspondence between service type information and address information that are of a computing network element includes the service type information of the first service and the corresponding address information, the service control network element or the computing control network element may preferentially select the computing network element as the first computing network element relative to another computing network element whose correspondence between service type information and address information does not include the service type information of the first service and the corresponding address information.

It should be understood that in this application, the service control network element may receive the first information of the computing network element, and receive the first address information of the computing network element or the first correspondence. The first information and the first correspondence are carried in a same message (for example, the registration message), or may be carried in different messages.

The first computing network element is used as an example. A plurality of addresses of the first computing network element may include a first address, and address information corresponding to the first address is referred to as first address information. In this application, the first address (or the first address information) may be used by the base station to send data #1 of the first service and the first computing network element to receive the data #1 of the first service. After receiving the data by using the first address information, the first computing network element may identify that the data belongs to the first service, to process the data #1 in a data computing manner and/or a data processing manner corresponding to the first service. Optionally, in embodiments of this application, the first computing network element may process the data #1 in the data computing manner and/or the data processing manner corresponding to the first service, to generate (or determine or obtain) data #2 of the first service. It should be understood that the data #2 of the first service is obtained by processing the data of the first service by the first computing network element, or the data #2 of the first service is data sent to the first device. The data #2 of the first service may also be referred to as a result of the first service.

In this application, the first address information may be allocated by the first computing network element, that is, the first computing network element may select one piece of address information as the first address information corresponding to the service type information of the first service. In addition, this application does not exclude that the service control network element or the computing control network element may specify (or determine or select) one piece of address information from a plurality of pieces of address information of the computing network element as the first address information. In this case, the service control network element or the computing control network element may indicate a correspondence between the first address information and the service type information to the first computing network element.

In addition, it should be understood that, if the computing network element has one address, or the computing network element has only one piece of address information, the computing network element receives any service (including the first service) by using an address corresponding to the address information. In this case, the address information may also be referred to as first address information.

Several possible manners in which the service control network element obtains the first address information are described herein with reference to examples.
(1) Manner a1: After determining the first computing network element, the service control network element requests the first address information from the first computing network element.

In this implementation, after determining the first computing network element in S502, the service control network element may send the service type information of the first service to the first computing network element, and receive the first address information returned by the first computing network element. Based on this, the service control network element and/or the first computing network element may learn of the correspondence between the service type information of the first service and the first address information. The service control network element may send the first address information to the access network device in S503.

In Manner a1, the first computing network element may further store the correspondence between the service type information of the first service and the first address information. When receiving the data #1 by using the first address information, the first computing network element may learn, based on the correspondence, that a service type of a service to which the data #1 belongs is the service type of the first service, to process the data #1 based on the service type information of the first service, to obtain the data #2 of the first service.

In Manner a1, the first information or the registration message sent by the first computing network element to the service control network element may not include the address information or the first address information.

(2) Manner a2: The first address information may be selected (or determined) by the service control network element from at least one piece of address information of the first computing network element. Optionally, the at least one piece of address information of the computing network element may be carried in the registration message, and the address information is in one-to-one correspondence with the service type information of the computing network element. Therefore, the service control network element may obtain the at least one piece of address information of the computing network element in a registration phase of the computing network element. In this way, after determining the first computing network element, the service control network element may determine the first address information from the at least one piece of address information of the first computing network element. In addition, optionally, the service control network element may alternatively determine the at least one piece of address information of the first computing network element from the first computing network element. For example, after determining the first computing network element, the service control network element requests the at least one piece of address information of the first computing network element from the first computing network element.

In Manner a2, when obtaining the at least one piece of address information of the computing network element, the service control network element may obtain a correspondence between the service type information and the address information that are of the computing network element from, where each piece of address information corresponds to one piece of service type information supported by the computing network element. Therefore, after determining the first computing network element, the service control network element may use, as the first address information, the address information that is of the first computing network element and that corresponds to the type information of the first service.

Compared with Manner a1, in Manner a2, both the service control network element and the first computing network element can learn of the correspondence between the service type information and the address information that are of the first computing network element. Therefore, after determining the first computing network element, the service control network element can obtain the first address information based on the correspondence and the service type information of the first service without requesting the first address information from the first computing network element.

In addition, similar to Manner a1, when receiving the data #1 by using the first address information, the first computing network element may learn, based on the correspondence between the service type information and the address information, that the service type of the service to which the data #1 belongs is the service type of the first service, to process the data #1 based on the service type information of the first service, to obtain the data #2 of the first service.

(3) Manner a3: The service control network element receives the first address information from the computing control network element.

In Manner a3, after determining the first computing network element, the computing control network element may include the first address information of the first computing network element in the information about the first computing network element and send the information about the first computing network element to the service control network element. For a manner in which the computing control network element learns of the first address information of the first computing network element, refer to the manners in which the service control network element obtains the address information of the first computing network element in Manner a1 and Manner a2.

Optionally, in S502, if the computing control network element needs to determine the first computing network element, the computing control network element may further receive the first address information from the first computing network element. For example, after determining the first computing network element, the computing control network element may send the service type information of the first service to the first computing network element, and receive the first address information returned by the first computing network element. For another example, the computing control network element may receive the first information from the computing network element, which includes a correspondence between the service type information and the address information. After determining the first computing network element, the computing control network element may determine the first address information based on the correspondence and the service type information of the first service.

It should be understood that, in this application, the service control network element may determine the first address information in one of Manner a1, Manner a2, and Manner a3, or a combination of the plurality of manners. In addition, this application does not exclude that the service control network element or the computing control network element selects one piece of address information from the plurality of pieces of address information of the first computing network element as the first address information, and the service control network element indicates the correspondence between the service type information of the first service and the first address information to the first computing network element. In this determining manner, the correspondence between the service type information and the address information does not need to be indicated in the first information.

In this application, after determining the first computing network element in S502, the service control network element may further send the service type information of the first service and a first identifier. Therefore, the first computing network element may store a correspondence between the first service and the first identifier.

The first identifier corresponds to the first service. Alternatively, the first identifier is allocated for the first service, or the first identifier is an identifier corresponding to the service type of the first service. In this application, the first identifier may be allocated by the service control network element or the computing control network element. If the first identifier is allocated by the service control network element, the service control network element may send the first identifier to the computing control network element. For example, the service control network element may include the first identifier in the request #2. Optionally, the request #2 may include the service type information of the first service and the first identifier.

If the first identifier is allocated by the computing control network element, the computing control network element may send the first identifier to the service control network element. For example, after determining the first computing network element, the computing control network element may send the first identifier (or the service type information of the first service and the first identifier) to the service control network element. For example, the computing control network element may send the service type information of the first service, the first identifier, and the information about the first computing network element to the service control network element. In addition, the computing control network element may alternatively send the first identifier (or the service type information of the first service and the first identifier) to the first computing network element.

In addition, in this application, the service control network element and/or the computing control network element may further send the first identifier (or the service type information of the first service and the first identifier) to the access network device. In this application, the first identifier may be used by the first computing network element to identify that the received data #1 is the data #1 of the first service, so that the data #1 of the first service can be processed in the computing method or the processing method corresponding to the first service. For example, after receiving the first identifier, the access network device may send the data #1 of the first service and the first identifier to the first computing network element, so that the first computing network element may learn that the data #1 is the data #1 of the first service. Therefore, the data #1 of the first service can be processed in the computing method or the processing method corresponding to the first service, to obtain the data #2.

It should be understood that the first identifier in this application may alternatively correspond to the first address information. For example, if the plurality of pieces of address information of the first computing network element respectively correspond to different service types or service type information, the different address information may alternatively correspond to different service identifiers, where there is a correspondence among the first service, the first address information, and the first identifier. Alternatively, if one piece of address information may correspond to a plurality of services, the address information may alternatively correspond to a plurality of identifiers corresponding to the services.

S503: The service control network element sends the information about the first computing network element to the access network device.

Correspondingly, the access network device receives the information about the first computing network element.

Optionally, the service control network element selects the access network device based on the area information in the request #1, where the access network device is located in the geographic area corresponding to the area information; and then sends the information about the first computing network element to the access network device.

In embodiments of this application, the information about the first computing network element may include an identifier and/or the first address information of the first computing network element. The identifier of the first computing network element may include a fully qualified domain name (fully qualified domain name, FQDN) of the first computing network element.

The information about the first computing network element herein includes the information that is about the first computing network element and that is sent by the service control network element to the access network device in S503, and may further include the information that is about the first computing network element and that is sent by the computing control network element to the service control network element after the computing control network element determines the first computing network element in S502. As described in this application, the first address information may be used to receive the data #1 of the first service, so that the first computing network element may determine, based on the first address information and the service type information of the first service corresponding to the first address information (or based on the correspondence between the service type information of the first service and the first address information), that the service type corresponding to the data #1 is the service type of the first service, to further process the data #1 in the data computing manner and/or the data processing manner corresponding to the first service, to obtain the data #2 of the first service.

In addition, optionally, in this application, a manner in which the first computing network element is supported in identifying a service (or the service type information or the service type) corresponding to the received data #1 is that the access network device sends both the data #1 of the first service and the first identifier corresponding to the first service. Optionally, the first computing network element may receive a correspondence between the service type information of the first service and the first identifier from the computing control network element or the service control network element. Therefore, when receiving the data #1 and the first identifier, the first computing network element may determine, based on the first identifier and the correspondence, that the service type corresponding to the data #1 is the service type of the first service, to further process the data #1 in the data computing manner and/or the data processing manner corresponding to the service type of the first service, to obtain the data #2 of the first service.

Based on S503, the access network device may send the data #1 of the first service, so that the first computing network element determines the data #2 of the first service based on the data #1. It should be understood that in embodiments of this application, the data #1 of the first service may be directly sent by the access network device to the first computing network element, or may be sent by the access network device and then forwarded by another network element to the first computing network element. This is not specifically limited in this application.

Optionally, the data #2 may be sent to the first device as service data. The data #1 may be data that is related to the first service and that is collected by the access network device. For example, for the sensing service, the data #1 may be first sensing data in this application, and the first computing network element may determine second sensing data based on the first sensing data and a data processing method corresponding to the sensing service.

Based on this procedure shown in FIG. 5, in the communication method provided in this embodiment of this application, after receiving the request #1 for requesting the first service, the service control network element may properly select the first computing network element based on the request #1, and send the information about the first computing network element to the access network device, so that the first access network device can send the data #1 of the first service to the first computing network element. The first computing network element may be configured to process the data #1 of the first service, to generate the data #2 of the first service. In this manner, the service control network element is supported in selecting the first computing network element closer to the access network device, to shorten transmission delay. In addition, functions of computing and processing the data #1 of the first service and generating the data #2 are released from the service control network element to the computing network element, so that congestion and delay caused by centralized feedback of the service data to the service control network element can be avoided, transmission delay is shortened, and transmission and computing overheads of the service control network element are reduced.

In embodiments of this application, the service control network element may further send, to the access network device, service control information (or referred to as control information corresponding to the first service). The service control information is used by the access network device to obtain the data #1 of the first service. In this application, the data #1 of the first service is the data that is related to the first service and that is collected by the access network device, or the data #1 of the first service is data that is of the first service and that is sent by the access network device to the first computing network element.

Optionally, the service control information and the information about the first computing network element in S503 may be carried in a same message, or the service control information and the information about the first computing network element may be respectively included in different messages. This is not specifically limited.

The service control information may be determined by the service control network element based on the request #1.

An example in which the first service is the sensing service is used. The service control network element may include sensing control information, and the sensing control information may indicate a sensing operation that needs to be performed by the access network device. Content that may be included in the sensing control information is described below with reference to a sensing service scenario. Details are not described herein.

In embodiments of this application, after determining the data #2 of the first service, the first computing network element may further send the data #2 of the first service, so that the first device can receive the data #2.

The first computing network element may send the data #2 in the following manners.

(1) Manner b 1: The first computing network element sends the data #2 of the first service to the first device based on a request of the first device.

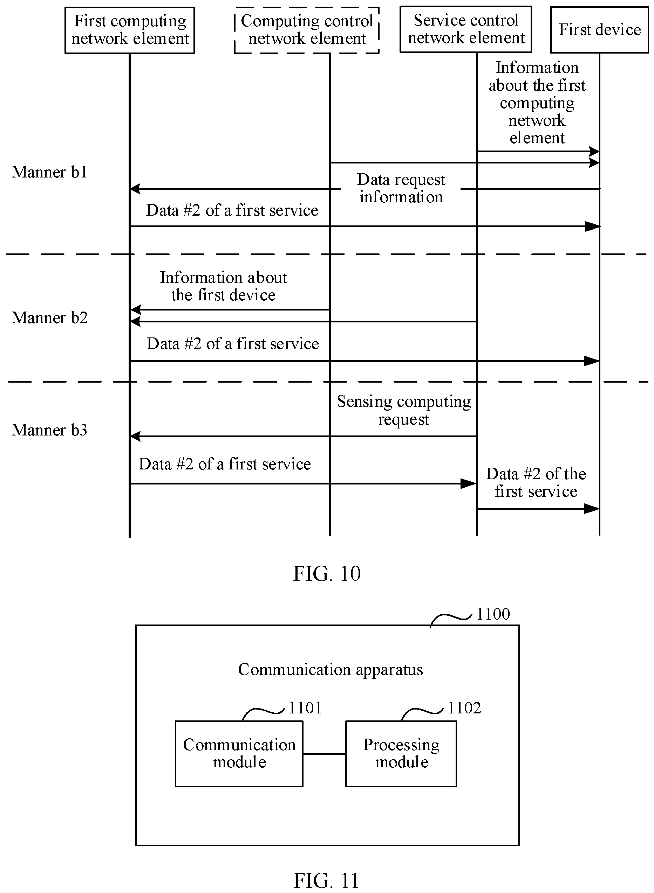

In Manner b 1, the first device may request the data of the first service from the first computing network element. For example, the first device may send data request information to the first computing network element. For example, as shown in FIG. 10, the service control network element or the computing control network element may send information about the first computing network element to the first device, so that the first device sends a data request to the first computing network element based on the information about the first computing network element, and the first computing network element may send the data #2 of the first service to the first device based on the data request. The data request may be for requesting data related to the first service, or be for requesting the first service, or be for requesting for generation, processing, or other processing for the data of the first service. Alternatively, the service control network element or the computing control network element may send information about the first computing network element to the first device, which is used by the first device to obtain the data #2 of the first service from the first computing network element.

The information about the first computing network element in Manner b1 may include the identifier and/or address information of the first computing network element. The address information herein may be referred to as second address information, and the second address information may be the same as or different from the first address information. For example, the second address information may be address information used by the first computing network element to receive the data request.

Optionally, in Manner b 1, the data request information may include the first identifier. In this case, the first computing network element may send the first identifier while sending the data #2, to indicate that the data #2 is the data of the first service.

(2) Manner b2: The first computing network element may send the data #2 of the first service to the first device based on information about the first device.

Optionally, the first device may be an AF, a UE, or another network element. Specifically, if the first device is the AF, the first computing network element may send the data #2 of the first service to the AF via the NEF. If the first device is the UE, the first computing network element may send a request #1 to the AF through a data plane communication connection. If the first device is the another network element such as an NWDAF, the first computing network element may send the data #2 of the first service to the NWDAF via an AMF.

In Manner b2, for example, as shown in FIG. 10, the first computing network element may receive the information about the first device from the service control network element or the computing control network element. If determining the first computing network element based on the request #1 and the first information of the computing network element in S502, the service control network element may send information about the first device to the first computing network element, where the information about the first device may be carried in the request #1. If the computing control network element determines the first computing network element based on the request #2 and the first information of the computing network element in S502, the computing control network element may send information about the first device to the first computing network element, where the information about the first device may be carried in the request #2, and the service control network element may include, in the request #2, the identifier of the first information in the request #1. Alternatively, if the computing control network element determines the first computing network element based on the request #2 and the first information of the computing network element in S502, the computing control network element may alternatively send the information about the first computing network element to the service control network element, and the service control network element then sends information about the first device to the first computing network element.

For example, as shown in FIG. 10, in Manner b2, after obtaining the information about the first device, the first computing network element may send the data of the first service to the first device based on the information about the first device. The information about the first device is, for example, an identifier and/or an address of the first device. The address of the first device includes, for example, an IP address.

For example, in Manner b2, the information about the first device may include the identifier or address information of the first device.

Optionally, in Manner b2, the service control network element or the computing control network element may send the information about the first device and the first identifier to the first computing network element. In this case, the first computing network element may send the first identifier while sending the data #2, to indicate that the data #2 is the data of the first service.

(3) Manner b3: The first computing network element may send the data #2 of the first service to the service control network element, and the service control network element sends the data #2 of the first service to the first device.

Optionally, the first computing network element may send the data #2 of the first service to the service control network element via the NEF.

Optionally, the first device may be an AF, a UE, or another network element. Specifically, if the first device is the AF, the service control network element may send the data #2 of the first service to the AF via the NEF. If the first device is the UE or the another network element such as an NWDAF, the service control network element may send the data #2 of the first service to the UE or the NWDAF via an AMF.

In a possible implementation of Manner b3, for example, as shown in FIG. 10, the first computing network element may receive a sensing computing request from the service control network element, and send the data #2 of the first service to the service control network element based on the sensing computing request. The sensing computing request may indicate the first computing network element to determine the data #2 of the first service, or may indicate the first computing network element to perform computation and/or processing on the data of the first service.

Optionally, the sensing computing request may include the first identifier of the first service from the service control network element. In Manner b3, in the optional manner of sending the data #2 of the first service, the first computing network element may send the data #2 of the first service and the first identifier to the service control network element, and the service control network element sends the data #2 and the first identifier to the first device. The first identifier may be used by the service control network element and/or the first device to learn that the data #2 is the data of the first service.

In addition, optionally, the sensing computing request may further include information indicating a condition for sending the data of the first service. For example, the condition may include an event trigger condition and/or a periodic reporting condition. In this application, for ease of description, the information indicating the condition for sending the data of the first service is referred to as second information.

Optionally, the second information and/or the condition for sending the data of the first service in this application may be included in a request #1, or the second information may be determined based on the information included in the request #1. In addition, the second information and/or the condition for sending the data of the first service may alternatively be determined by the service control network element based on the service type information.

The event trigger condition means that the first computing network element determines, based on the data #1 and/or the data #2 of the first service, that a specific event is met. For example, for the sensing service, the event trigger condition may include a sensing event and a corresponding event trigger condition. The sensing event is, for example, that an uncrewed aerial vehicle or a specific target object is identified through sensing, and the corresponding event trigger condition is, for example, that a quantity of identified uncrewed aerial vehicles or specific target objects reaches a specified threshold.

In this application, when the first computing network element obtains the event trigger condition, that the first computing network element sends the data #2 of the first service may alternatively be replaced with that the first computing network element sends a sensing event indication, where the sensing event indication may indicate that the event is sensed. The sensing event indication may include a sensing event identifier. The sensing event identifier corresponds to the sensing event. For example, when the first computing network element determines, based on the data #1 of the sensing service, that the uncrewed aerial vehicle is sensed, that is, the sensing event is that the uncrewed aerial vehicle is sensed, and the sensing event identifier corresponding to the sensing event is a sensing event identifier #1, the first computing network element may send the sensing event identifier #1, to indicate that the uncrewed aerial vehicle is sensed.

For another example, the sensing event identifier may alternatively correspond to the sensing event and the corresponding event trigger condition. An example in which the sensing event is that the uncrewed aerial vehicle is sensed is still used. If the event trigger condition is that a threshold for the uncrewed aerial vehicles is sensed, the sensing event identifier may indicate that the uncrewed aerial vehicle is sensed, and a quantity of sensed uncrewed aerial vehicles meets the threshold.

The periodic reporting condition means that the first computing network element reports the data #2 of the first service based on a specific periodicity. The sensing service is used as an example. The first computing network element may report the sensing data based on a specific periodicity.

In another possible implementation of Manner b3, for example, as shown in FIG. 10, if the computing control network element selects the first computing network element based on the request #2 and the first information of the at least one computing network element, the computing control network element may further send an identifier or an address of the service control network element to the first computing network element, and the first computing control network element may send the data #2 of the first service to the service control network element based on the identifier or the address of the service control network element.

It should be understood that in this application, the first computing network element may send the data #2 of the first service in one of Manner b 1, Manner b2, and Manner b3, or a combination of the plurality of manners. For example, in Manner b 1 and/or b2, the service control network element may alternatively send the second information to the first computing network element, so that an action of sending the data #2 of the first service by the first computing network element in Manner b 1 and/or Manner b2 meets the condition indicated by the second information. In addition, in Manner b3, the service control network element may also be replaced with the computing control network element, so that the computing control network element forwards the data #2 of the first service.

In addition, in any implementation of Manner b1, Manner b2, and Manner b3, the computing control network element may alternatively send the second information to the first computing network element, so that the computing control network element indicates, to the first computing network element, the condition that needs to be met for an action of sending the data #2 of the first service by the first computing network element.

The following describes an implementation of S502 with reference to FIG. 6 to FIG. 9 and by using examples. The implementation may include Manner c1 and Manner c2.

(1) In Manner c1, the service control network element may determine the first computing network element based on the request #1 of the first device and the first information of the at least one computing network element.

As shown in FIG. 6, in a possible architecture in which a service control function is separated from a service computing function, a service control network element configured to implement the service control function may be deployed in a core network, and is configured to be responsible for a service-related control operation, for example, responsible for obtaining information such as service requirement information of a service demander, and selecting a proper computing network element to process service data. A computing network element (or referred to as a service computing network element or a service data computing network element) configured to implement the service computing function may be configured to process service data collected by an access network device. The computing network element may be deployed at a location close to the example access network device, for example, a campus. This is not specifically limited. In addition, in the architecture, the service control network element or the computing network element may send the processed service data to the first device. Based on the architecture shown in FIG. 5, the communication method may be implemented by the service control network element, the computing network element, and the access network device.

Based on the architecture shown in FIG. 6, the communication method provided in this embodiment of this application may be implemented by the service control network element, the computing network element, and the access network device. The service control network element may obtain information such as service requirement information of a service demander (for example, the first device in FIG. 8), and may support selection of a first computing network element from a plurality of computing network elements. The first computing network element may receive, via the UPF, data sent by the access network device (for example, a RAN 1 or a RAN 2 in FIG. 6), and process the data.

As described above, the first service in this application may be the sensing service, or may be another service in which the access network device collects first service data, and a core network element computes the data and generates second service data. An example in which a first service is a sensing service is used. The service control network element may include an SCF, the computing network element may include a CF, and the access network device may include a RAN. Therefore, the communication method may be implemented by the SCF, at least one CF (including a first CF), and the RAN. As shown in FIG. 7, the method may include the following steps.

S701: The at least one CF including a first computing network element sends first information to the SCF. The first information may include at least one of the service type information, location information, and computing resource information of the computing network element.

For content that may be carried in the first information, refer to descriptions in this embodiment of this application. Details are not described herein again. The first information may be carried in a registration message.

For example, in S701, the CF may be used as an AF, and sends a registration message to the SCF via an NEF. Alternatively, in S701, the CF may send a registration message to an NEF, the NEF stores the registration message in a UDR, and the SCF then obtains the registration message from the UDR via the NEF. Alternatively, the CF may be a UE, and the UE sends a registration message to the SCF via an AMF. It is assumed that there is only one SCF in a core network. Therefore, a problem of selecting the SCF does not exist.

It should be understood that S701 is an optional step. For example, the registration message of the CF may alternatively be sent or configured in the SCF in a communication manner of a non-3GPP network.

S702: A first device sends a request #1 to the SCF. The request #1 may be a sensing service request. For example, the request #1 may be for requesting a sensing service. Alternatively, the request #1 may be for requesting an operation related to a sensing service. Alternatively, the request #1 may be for requesting data (or sensing data) of a sensing service.

Therefore, the first device is a requester of the first service.

In an example, the first device may be an AF, a UE, or another network element. Specifically, in S702, if being the AF, the first device may send the request #1 to the SCF via the NEF. If being the UE, the first device may send the request #1 to the SCF via the AMF. If being the another network element such as an NWDAF, the first device may directly send the request #1 to the SCF.

It should be understood that an execution sequence of S702 and S701 is not specifically limited in this application.

For example, the request #1 in S702 includes at least one of service type information, area information, and service requirement information of the sensing service.

For example, the request #1 may include service type information of the sensing service and service requirement information of the sensing service, and the service requirement information may include area information.

For example, the sensing service is used as an example. The service type information may indicate a sensing service type. For example, the sensing service type may include object distribution, a map, driving, violation detection, object track tracking, emergency event detection, object positioning, an object contour size, an object speed, weather prediction, a human posture, human health, uncrewed aerial vehicle sensing, or vehicle sensing.

The service requirement information may include at least one of the service requirement information: a first sensing distance, a first sensing area, a first sensing speed range, first sensing distance resolution, first sensing angle measurement precision, first sensing speed resolution, a first QoS requirement, a first sensing location point, a first sensing UE identifier, first sensing time information, first sensing object identification accuracy, a first sensing object identification false alarm rate, first sensing data precision, a first sensing data update frequency, a first sensing dimension indication, and a first sensing feedback manner.

For clarity and brevity of description, a universal set including the foregoing information is referred to as a first information set below. The service requirement information may include some or all information in the first information set.

The first sensing area may indicate the area information. If the request #1 includes the area information, the first sensing area may not be included. Alternatively, if the request #1 carries the first sensing area, the area information may not be included. Alternatively, the area information may include the first sensing area.

The sensing distance resolution refers to a minimum distance distinguished between two targets that are located at a same azimuth but have respective different distances from the sensing network element. That is, the sensing distance resolution defines a capability of the sensing network element to distinguish between the two short-distance targets.

The sensing angle measurement precision refers to a capability of the sensing network element to distinguish between adjacent targets in terms of an angle, and measurement is usually performed by using a minimum identifiable angle. Alternatively, the angle measurement precision may also be referred to as angle resolution.

The sensing speed resolution refers to a capability of the sensing network element to distinguish between targets in terms of a radial speed. Alternatively, the sensing speed resolution may be a sensing speed precision range or a sensing speed error range.

The sensing location point may be absolute coordinates or relative coordinates of a geographical location. This is not limited.

The UE identifier may be an external identifier of the UE, for example, a generic public subscription identifier (generic public subscription identifier, GPSI).

For example, the sensing object identification accuracy may be a probability that a target actually exists and existence of the target is determined.

For example, if the probability that the target actually exists and the existence of the target is determined is P, a probability that the target actually exists and inexistence of the target is determined is 1-P.

Optionally, the first sensing object identification accuracy may be identification accuracy obtained by performing sensing identification on a target object by using at least one of the sensing distance resolution, the sensing angle measurement precision, and the sensing speed resolution.

For example, the first sensing object identification false alarm rate may be a probability that a target actually does not exist but existence of the target is determined, or may be a probability that the target actually exists but inexistence of the target is determined.

For example, if the probability that the target actually does not exist but the existence of the target is determined is Q, a probability that the target actually does not exist and inexistence of the target is determined is 1-Q.

It should be noted that the object identification accuracy and the object identification false alarm rate are two different parameters.

Optionally, the sensing object identification false alarm rate may be an identification false alarm rate obtained by performing sensing identification on a target object by using at least one of the sensing distance resolution, the sensing angle measurement precision, and the sensing speed resolution.

In addition, the object identification accuracy or the object identification false alarm rate may also be replaced with identification of a scattering point of the target object. That is, an identification success rate or an identification false alarm rate are obtained by identifying the target object based on the at least one of the sensing distance resolution, the sensing angle measurement precision, and the sensing speed resolution.

For example, the sensing data precision may be image resolution.

For example, the sensing data update frequency may be an image frame rate.

In addition, a difference between the first sensing data update frequency and a feedback periodicity of first sensing data should be noted.

For example, a video image is used as an example. The data update frequency is a video frame rate, and a higher frame rate indicates better coherence. For example, 60 frames mean that a video needs to have 60 pictures within 1s. The feedback periodicity means that a segment of consecutive video frames is fed back at intervals of a period of time (for example, 10s).

Optionally, the sensing dimension indication indicates a dimension of the sensing data.

For example, the first sensing dimension indication indicates that the first sensing data is two-dimensional plane data or three-dimensional stereoscopic data.

For example, the first sensing time information includes a time length, or includes a start moment, an end moment, and the like.

Further, the first sensing feedback manner may be one or more of the following:
single feedback, periodic feedback, and event-triggered feedback.

When the first sensing feedback manner is the periodic feedback, a service requirement further includes a first feedback periodicity of the first sensing data. The first sensing feedback manner may be used to determine a sending condition that is of data #2 of the first service and that is indicated by second information.

Optionally, the first QoS requirement may include one or more of the following:
a first service priority, a first data rate, first delay, and object identification accuracy.

Alternatively, the object identification accuracy in the first QoS requirement may be an object identification error rate. In other words, the first QoS requirement may include the object identification accuracy or the object identification error rate.

Optionally, the first QoS requirement may further include one or more of the following:
a QoS parameter identifier and a priority corresponding to the QoS parameter identifier.

For example, the first QoS requirement may include a QoS parameter indicated by the QoS parameter identifier. Optionally, there may be one or more QoS parameters.

For example, the service requirement includes one or more of the following information:
a first sensing QoS requirement, the first sensing location point, the first sensing UE identifier, the first sensing time information, the first sensing dimension indication, and the first sensing feedback manner.

The first sensing QoS requirement may include one or more of the following:
the first sensing distance, the first sensing area, the first sensing speed range, the first sensing distance resolution, the first sensing angle measurement precision, the first sensing speed resolution, the first sensing object identification accuracy, the first sensing object identification false alarm rate, the first sensing data precision, and the first sensing data update frequency.

S703: The SCF determines a first CF based on the request #1 and the first information of the at least one CF.

The first CF may be configured to generate data of the sensing service. Specifically, the first CF may be configured to generate data #2 of the sensing service (which may be referred to as second sensing data below) based on data #1 of the sensing service (which may be referred to as first sensing data below). The first sensing data may be collected by the access network device or the UE and sent to the first CF.

For an execution process of S703, refer to descriptions in this application. For example, the SCF may select, as the first CF based on the service type information of the computing network element in the first information of the computing network element and the service type information of the sensing service carried in the request #1, a CF that supports the service type information of the sensing service, so that the first CF supports processing of the data corresponding to the carried service type information of the sensing service. For another example, the SCF may select the first CF based on the location information (such as a DNAI) of the CF in the first information of the CF and the area information of the sensing service in the request #1. For example, the DNAI of the first CF belongs to a sensing area indicated by the area information, or an address location corresponding to the DNAI of the first CF belongs to the sensing area, or an address location corresponding to the DNAI of the first CF is adjacent to the sensing area. For another example, the SCF may select the first CF based on the location information and the sensing service type information.

Optionally, after determining the first CF, the SCF may perform at least one of the following S704-1 and S704-2.

S704-1: After determining the first CF, the SCF may send a sensing computing request to the first CF, to request the first CF to perform sensing computation. The sensing computing request may include service type information of the sensing service.

Optionally, the first CF may be a server or a UE. Specifically, if the first CF is the server, the SCF may send the sensing computing request to the server via the NEF. If the first CF is the UE, the SCF may send the sensing computing request to the UE via the AMF.

The service type information may be determined based on the service type information in the request #1.

Correspondingly, the first CF may receive the sensing computing request, and send a feedback message, where the feedback message may carry first address information, and the first address information is used to receive the first sensing data.

For example, the first address information may be an IP address of the CF or a combination of the IP address and a port number. Optionally, the first address information may be one of a plurality of pieces of address information of the CF, and the plurality of pieces of address information may be a plurality of IP addresses, or combinations of the plurality of IP addresses and at least one port number, or combinations of one IP address and a plurality of port numbers. This is not specifically limited.

Based on S704-1, the first CF may obtain (or store) a correspondence between the service type information of the sensing service and the first address information. Subsequently, when receiving data sent by using the first address information, the first CF may identify that the data is data of the service type information, and process the data in a data computing manner and/or a data processing manner corresponding to the service type information.

S704-2: After determining the first CF, the SCF may send a sensing computing request to the first CF, to request the first CF to perform sensing computation. The sensing receiving request may include the service type information of the sensing service and a first identifier. The first identifier corresponds to the sensing service. Therefore, the first identifier may also be referred to as a sensing operation identifier.

Optionally, the first CF may be a server or a UE. Specifically, if the first CF is the server, the SCF may send the sensing computing request to the server via the NEF. If the first CF is the UE, the SCF may send the sensing computing request to the UE via the AMF.

The service type information may be determined based on the service type information in the request #1.

Correspondingly, the first CF may receive the sensing receiving request, and send a feedback message to the SCF, where the feedback message may carry address information, and the address information is not limited to receiving the first sensing data, and may be further used to receive data of another service.

Based on S704-2, the first CF may obtain (or store) a correspondence between the service type information of the sensing service and the first identifier. Subsequently, when receiving data sent with the first identifier, the first CF may identify that the data is data of the service type information, and process the data in the data computing manner and/or the data processing manner corresponding to the service type information.

Optionally, if S704-2 is performed, the SCF may further send the first identifier to the first device. For example, the first identifier may be carried in a response message of the request #1.

S705: The SCF sends information about the first CF to an SMF.

Based on S705, the SMF may select a proper UPF based on the information about the first CF, so that the RAN can send the first sensing data to the first CF via the UPF.

Optionally, the information about the first CF herein may include the location information of the CF, for example, the DNAI. The SMF may select the UPF based on a relationship between UPF deployment and the DNAI. In addition, if the information about the first CF includes an address of the first CF, the SMF may select a UPF connected to or interworking with the address of the first CF, or the SMF may determine an address range, supported by the UPF, to which the address of the first CF belongs, and further select the UPF. If the information about the first CF includes an identifier of the first CF, for example, an FQDN, the SMF may first perform a query by using an NRF or in another way of using a domain name system (domain name system, DNS) or the like, to obtain the location information of the first CF or an address of the first CF, and then select the UPF.

S706: The SCF sends the information about the first CF to the RAN. The information about the first CF is used by the RAN to send the first sensing data to the first CF.

Optionally, the SCF sends the information about the first CF to the RAN via the AMF.

The information about the first CF herein includes address information of the first CF and/or the identifier of the first CF.

If the information about the first CF includes the address information of the first CF, the RAN may send the first sensing data to the first CF based on (or by using) the address information of the first CF. The address information of the first CF may include the first address information of the first CF in S704-1. The first address information may be used by the first CF to receive the first sensing data. Therefore, the data received by using the first address information is the first sensing data. If the information about the first CF includes the identifier of the first CF, for example, an FQDN, the RAN may perform a query by using an NRF or in another way of using a DNS or the like, to obtain an address of the first CF, and then send the first sensing data based on the address of the first CF.

Optionally, the SCF further sends the first identifier in S704-2 to the RAN, where the first identifier corresponds to the sensing service. When sending the first sensing data to the first CF, the RAN may further send the first identifier. For example, the first identifier and the first sensing data are carried in a same message. When receiving the first identifier and the data, the first CF may determine that the data is the first sensing data.

In S706, the SCF may send, to the RAN, a sensing control request message that includes the information about the first CF and/or the first identifier.

Optionally, the sensing control request message may further include the service type information of the sensing service and/or sensing control information. The sensing control information is used to control the access network device (or a terminal device) to perform a sensing operation indicated by the sensing control information.

The sensing control information may be determined by the SCF based on the request #1. Specifically, the sensing control information may be determined by the SCF based on the service requirement information of the sensing service in the request #1.

For example, the sensing control information may include one or more of the following information:
a second sensing distance, a second sensing area, a second sensing speed range, second sensing distance resolution, a second sensing angle measurement precision, second sensing speed resolution, a second sensing QoS requirement, a second sensing location point, a second sensing UE identifier, second sensing time information, a second sensing object identification accuracy, a second sensing object identification false alarm rate, a second sensing data precision, a second sensing data update frequency, a second sensing dimension indication, a sensing detection periodicities, and a second sensing feedback manner.

For clarity and brevity of description, a universal set including the foregoing information is referred to as a second information set below. Optionally, the second information set includes any information included in the at least one of the service type information, the area information, and the service requirement information in the request #1.

Herein, the sensing detection periodicity indicates a periodicity in which the access network device (or the UE) performs sensing detection (or a sensing operation), or a periodicity in which the access network device performs sensing.

Optionally, the sensing detection periodicity may be obtained based on the second sensing data update frequency.

Optionally, the second sensing feedback manner includes one or more of the following:
single feedback, periodic feedback, and event-triggered feedback.

Further, when the second sensing feedback manner is the periodic feedback, the sensing control information further includes a second feedback periodicity.

Further, the second sensing QoS requirement includes one or more of the following:
a second service priority, a second data rate, and second delay.

The data rate is a rate of the sensing service.

In this application, the first delay or the second delay is delay from requesting, by the sensing service demander, the sensing service to obtaining the sensing service. The first delay and/or the second delay may be used to determine a reporting periodicity condition indicated by the second information.

Alternatively, the first delay or the second delay is delay from performing sensing detection by the access network device to obtaining the second sensing data by the service demander.

Alternatively, the first delay or the second delay is delay from obtaining the first sensing data by the access network device to obtaining the second sensing data by the demander.

Optionally, the sensing control information includes one or more of the following information:
the second sensing QoS requirement, the second sensing location point, the second sensing UE identifier, the second sensing time information, the second sensing dimension indication, the sensing detection periodicity, and the second sensing feedback manner.

The second sensing QoS requirement includes one or more of the following:
the second sensing distance, the second sensing area, the second sensing speed range, the second sensing distance resolution, the second sensing angle measurement precision, the second sensing speed resolution, the second sensing object identification accuracy, the second sensing object identification false alarm rate, the second sensing data precision, and the second sensing data update frequency.

Optionally, in this application, the service control network element may obtain the sensing control information based on the at least one of the service type information, the area information, or the service requirement information in the request #1.

As described above, in S702, the service control network element may receive a first message from the first device, where the first message may carry the at least one of the service type information, the area information, or the service requirement information of the first service requested by the first device. The service requirement information may include one or more of items in the foregoing first information set. In S706, the service control network element may send a sensing control request message to the access network device, where the sensing control request message may carry one or more pieces of the information in the second information set, and/or carry service type information (where the service type information may be determined based on the service type information in the request #1, or is the same as the service type information in the request #1).

It may be found that the service control network element may determine, based on one or more pieces of the information in the first information set, to obtain the one or more pieces of the information in the second information set. In other words, the service control network element determines the one or more pieces of the information in the second information set based on the one or more pieces of the information in the first information set, to further determine the information carried in the control request message.

For example, the service control network element obtains the sensing control information by performing one or more of the following operations:
obtaining the second sensing distance based on the first sensing distance;
obtaining the second sensing area based on the first sensing area;
obtaining the second sensing location point based on the first sensing location point;
obtaining the second sensing UE identifier based on the first sensing UE identifier;
obtaining the second sensing time information based on the first sensing time information;
obtaining the second sensing feedback manner based on the first sensing feedback manner; and
obtaining the second feedback periodicity based on the first feedback periodicity.

It should be understood that one or more of the first sensing distance, the first sensing area, the first sensing location point, the first sensing UE identifier, the first sensing time information, the first sensing feedback manner, and the first feedback periodicity may be included in a request message from a first network element.

For example, if the first sensing distance is 200 m, for processing redundancy of subsequently processing the sensing data, the service control network element may set the second sensing distance to be greater than 200 meters (m), for example, 210 m.

Optionally, the first sensing distance and the second sensing distance may be the same.

For example, the first sensing area is an area range of 10 kilometers (km)×10 km, and coverage of a single access network device is 3 km×3 km, but not the entire 3 km×3 km belongs to the first sensing area. For example, an access network device can sense only an area range of 1 km×1 km. The service control network element needs to determine a second sensing area for each access network device based on the first sensing area and a sensing range of the access network device.

Optionally, the first sensing area and the second sensing area may be the same.

For example, there are a plurality of (for example, 10) first sensing location points, and the service control network element determines that a plurality of (for example, 3) different access network devices need to separately perform sensing. For example, an access network device A senses four of the location points, an access network device B senses three of the location points, and an access network device C senses three of the location points.

Optionally, the first sensing location point and the second sensing location point may be the same.

For example, if the first sensing UE identifier is the external identifier (for example, the GPSI), the service control network element converts the external identifier into an internal identifier, for example, a subscription permanent identifier (subscription permanent identifier, SUPI), a globally unique temporary identity (globally unique temporary identity, GUTI), a system architecture evolution-temporary mobile subscriber identity (system architecture evolution-temporary mobile subscriber identity, S-TMSI), a next generation application protocol identifier (next generation application protocol identifier, NGAP ID), a cell radio network temporary identifier (cell-radio temporary identity, C-RNTI), or another internal UE ID that can be identified by the service control network element.

For example, if first sensing duration indicated by the first sensing time information is 100s, for processing redundancy of subsequently processing the sensing data, the service control network element may set second sensing duration indicated by the second sensing time information to be greater than 100s, for example, 110s.

Optionally, the first sensing duration and the second sensing duration may be the same.

For example, for the feedback manner, in a case of a plurality of sensing service requests, some feedback manners are single sensing, and some feedback manners are periodic sensing, and the service control network element may perform aggregation. For example, if a first sensing feedback manner 1 is the single sensing, and a first sensing feedback manner 2 is the periodic sensing, the second sensing feedback manner is set to the periodic sensing. After being processed by the service control network element, the first sensing data may be separately provided to a plurality of sensing requesters.

Optionally, the first sensing feedback manner and the second sensing feedback manner may be the same.

Similarly, for the feedback periodicity, in a case of a plurality of sensing service requests, feedback periodicities requested by different sensing requesters are different, and the service control network element may perform aggregation. For example, if a first sensing feedback periodicity 1 is 5s, and a first sensing feedback periodicity 2 is 10s, the second sensing feedback periodicity may be set to 5s. After being processed by the service control network element, the first sensing data may be separately provided to the plurality of sensing requesters.

Alternatively, the service control network element further performs one or more of the following operations:
obtaining the second sensing QoS requirement based on the first sensing QoS requirement; or
obtaining the second sensing QoS requirement based on the service type of the first sensing service.

For example, the sensing service demander may determine, in advance with the service control network element, a QoS requirement corresponding to the service type of the first sensing service. Therefore, the service control network element may obtain, based on a service type carried in the request message from the first network element, the QoS requirement corresponding to the service type of the first sensing service. In addition, it is complex to complete end-to-end sensing detection in the communication network, including a plurality of types of data processing and data transmission, and the QoS requirement of the first sensing service may need to be modified or further split. Therefore, the service control network element may determine, based on the QoS requirement that can be provided by the access network device or the service type of the first sensing service, the QoS requirement (namely, the second QoS requirement) for performing the sensing operation by the access network device, and include the second sensing QoS requirement in the sensing control request message and send the sensing control request message to the access network device.

For example, if the delay of the first QoS requirement is 100 ms, considering end-to-end delay, including data transmission delay, sensing data processing delay, delay redundancy, and the like of each interface, the service control network element may set the delay of the second QoS requirement to be less than 100 ms, for example, 80 ms. For another example, the sensing delay 100 ms of the first QoS requirement is delay from requesting, by the requester with the sensing requirement, the sensing service to obtaining the sensing service. In this case, the service control network element may perform splitting, and the sensing delay of the second QoS requirement is delay from sending, by the service control network element, a sensing control command to obtaining the first sensing data. In this case, the sensing delay of the second QoS requirement may be set to 50 ms.

Optionally, the sensing delay of the first QoS requirement and the sensing delay of the second QoS requirement may be the same.

In addition, optionally, the service control network element may further determine, based on one or more of the following items, a periodicity (namely, the sensing detection periodicity) for performing the sensing operation by the access network device:
the service type of the first sensing service, the second sensing QoS requirement, the first sensing object identification accuracy, the first sensing object identification false alarm rate, the first sensing data precision, and the first sensing data update frequency.

Optionally, the service control network element may further perform one or more of the following operations, to obtain some requirements for performing the sensing operation by the access network device:
obtaining the second sensing distance resolution based on the first sensing distance resolution;
obtaining the second sensing angle measurement precision based on the first sensing angle measurement precision;
obtaining the second sensing speed resolution based on the first sensing speed resolution;
obtaining the second sensing object identification accuracy based on the first sensing object identification accuracy; and
obtaining the second sensing object identification false alarm rate based on the first sensing object identification false alarm rate.

For example, if the first sensing distance resolution indicated by the first sensing distance resolution is yy, for processing redundancy of subsequently processing the sensing data, the service control network element may set the second sensing distance resolution indicated by the second sensing distance resolution to be greater than or lower than yy, for example, zz.

Optionally, the first sensing distance resolution and the second sensing distance resolution may be the same.

The foregoing other parameters (for example, the sensing angle measurement precision, the sensing speed resolution, the sensing object identification accuracy, or the sensing object identification false alarm rate) are similar, and are not described one by one.

For example, distance resolution: yy=0.5 m, and zz=0.4 m; angle measurement precision: yy=0.5°, and zz=0.4°; speed resolution: yy=0.5 m/s, and zz=0.4 m/s; identification accuracy: yy=90%, and zz=91%; and false alarm rate: yy=5%, and zz=4%.

Optionally, the service control network element may further perform one or more of the following operations, to obtain some requirements for performing the sensing operation by the access network device:
obtaining one or more of the following items based on one or more of the first sensing QoS requirement, the first sensing distance, the first sensing area, the first sensing speed range, the first sensing object identification accuracy, the first sensing object identification false alarm rate, the first sensing data precision, and the first sensing data update frequency:
the second sensing distance resolution, the second sensing angle measurement precision, the second sensing speed resolution, the second sensing object identification accuracy, and the second sensing object identification false alarm rate.

Optionally, the service control network element may perform some or all of the foregoing operations, or a combination of some operations in different embodiments. This is not limited.

Optionally, in an implementation, the sensing control information may include:
an area sensing indication; or
an area sensing indication and the second area.

For example, the sensing control information may include the area sensing indication, and the sensing area indication may implicitly indicate the RAN to sense coverage of the RAN, and does not need to specially indicate a sensing area.

For example, the sensing control information may include the area sensing indication and the second area, and the area sensing indication indicates the RAN to perform a sensing operation on the second area.

Optionally, in an implementation, the sensing control information may include:
a UE sensing indication and the second sensing UE identifier;
a UE sensing indication and UE location information; or
a UE sensing indication, the second sensing UE identifier, and UE location information.

Herein, the UE sensing indication indicates that the sensing operation is for the UE, and the sensing control information may carry the identifier (namely, the second sensing UE identifier) that is of the UE and that needs to be sensed.

For example, the sensing control information may include the UE sensing indication and the UE location information, to indicate the access network device to sense a current location of the UE.

For example, the sensing control information may include the UE sensing indication, the identifier that is of the UE and that needs to be sensed, and the location information of the UE.

Optionally, in an implementation, the sensing control information may include:
a continuous tracking indication;
a continuous tracking indication and the second sensing UE identifier; or
a continuous tracking indication and the second sensing area.

For example, if the sensing control information includes the continuous tracking indication, the access network device is implicitly indicated to continuously track all objects in coverage of the access network device.

For example, if the sensing control information includes the continuous tracking indication and an identifier of a UE (namely, the second sensing UE identifier), the access network device is indicated to continuously track the UE.

Optionally, the sensing control information may alternatively include the continuous tracking indication and identifiers of a plurality of UEs, to indicate the access network device to continuously track the plurality of UEs.

For example, if the sensing control information includes the continuous tracking indication and the second sensing area, the access network device is indicated to continuously track all targets in the second sensing area.

Optionally, in an implementation, the sensing control information includes a service type.

Optionally, in the foregoing embodiments, the first sensing data may be one of the following data obtained by the access network device based on an echo signal:
a time-domain digital signal, distance-speed spectrum information, location information and a speed value of the scattering point, and location information and a speed value of the target object.

For example, an example in which the access network device collects sensing data is used. The first sensing data may be obtained in one of the following manners:

The access network device obtains the first sensing data based on an echo signal;
the access network device first obtains a time-domain digital signal based on the echo signal, and then obtains the first sensing data based on the time-domain digital signal;
the access network device first obtains distance-speed spectrum information based on the echo signal, and then obtains the first sensing data based on the distance-speed spectrum information;
the access network device first obtains location information and a speed value of the scattering point based on an echo signal, and then obtains the first sensing data based on the location information and the speed value of the scattering point; or
the access network device first obtains location information and a speed value of the target object based on an echo signal, and then obtains the first sensing data based on the location information and the speed value of the target object.

In a possible implementation, the access network device may be a radio access network device, for example, a RAN.

In another possible implementation, the access network device may be a UE corresponding to the access network device.

For example, under control of the service control network element, the UE may sense surrounding information of the UE, obtain sensing data, and report the sensing data to the access network device. For example, the UE may sense that a distance of 50 meters around the UE is used for automatic driving assistance; sense a human body shape, a contour, and an action around the UE; and sense a human body, breathing, and heartbeat.

After S706, the RAN may obtain the first sensing data. Specifically, the RAN sends a sensing signal and receives an echo signal. The echo signal is a reflected signal of an object for the sensing signal. The RAN performs particular processing based on the echo signal to generate the first sensing data, or directly uses data corresponding to echo signal as the first sensing data.

In an example, the RAN may send the first sensing data to the first CF based on the first address information of the first CF. Specifically, the RAN may send the first sensing data to the first CF directly or via the UPF or via the AMF.

In another example, the RAN may send the first sensing data and the first identifier to the first CF. Specifically, the RAN may send the first sensing data and the first identifier to the first CF directly or via the UPF or via the AMF.

S707: The first CF generates the second sensing data based on the first sensing data from the RAN. Alternatively, the second sensing data is obtained based on the first sensing data.

The first CF may determine, based on the first address information or the first identifier, to use the data computing manner and/or the data processing manner corresponding to the service type information of the sensing service, to generate the second sensing data based on the first sensing data and in the data computing manner and/or the data processing manner.

Optionally, the second sensing data may alternatively be the same as the first sensing data.

It should be understood that different service types may correspond to different data computing manners and/or data processing manners. Therefore, when the first CF supports processing of data of a plurality of service types, a data computing manner and/or a data processing manner needed by each piece of data may be indicated by using this method.

S708: The first CF sends the second sensing data.

Correspondingly, the first device receives the second sensing data.

For example, in S708, the first CF may send the second sensing data in this sending manner of the data #2 of the first service described in this application. In S708, the first CF may send the second sensing data in one or a combination of a plurality of manners in Manner b 1, Manner b2, or Manner b3. For a specific sending manner, refer to descriptions in this application. Details are not described herein again.

Based on the procedure shown in FIG. 7, the service control function may be separated from the service computing function by using the architecture shown in FIG. 6, to shorten service delay, and reduce a processing load of the core network element. In addition, because the computing network element may support processing of the data of the plurality of service types, utilization of computing power resources in this network can be improved, thereby improving processing efficiency of the service data.

(2) In Manner c2, the service control network element may send a request #2 to the computing control network element based on the request #1, so that the computing control network element determines the first computing network element based on the request #2 and the first information of the at least one computing network element. Then, the computing control network element sends the information about the first computing network element to the service control network element, so that the service control network element determines the first computing network element.

As shown in FIG. 8, in a possible architecture in which a service control function is separated from a service computing function, a service control network element configured to implement the service control function may be deployed in a core network, and is configured to be responsible for a service-related control operation, for example, responsible for obtaining information such as service requirement information of a service demander, and selecting a proper computing network element to process service data. A computing network element (or referred to as a service computing network element or a service data computing network element) configured to implement the service computing function may be configured to process service data collected by an access network device. In addition, in the architecture, the computing control network element may be configured to manage the computing network element, for example, may be configured to select, based on the information such as the service requirement information, the proper computing network element to process the service data.

Based on the architecture shown in FIG. 8, the communication method provided in this embodiment of this application may be implemented by the service control network element, the computing control network element, the computing network element, and the access network device. The service control network element may obtain information such as service requirement information of a service demander (for example, the first device in FIG. 8), and the computing control network element may support selection of a first computing network element from a plurality of computing network elements. The first computing network element may receive, via the UPF, data sent by the access network device (for example, a RAN 1 or a RAN 2 in FIG. 8), and process the data.

An example in which a first service is a sensing service is used. The service control network element may include an SCF, the computing network element may include a CF, the computing control network element may include a CCF, and the access network device may include a RAN. Therefore, the communication method may be implemented by the SCF, the CCF, at least one CF (including a first CF), and the RAN. The method may include steps shown in FIG. 9. Compared with FIG. 7, a difference lies in that first information of the CF is sent to the CCF, and the CCF determines the first CF based on a request #2 and the first information of the CF, where the request #2 may be obtained by the SCF based on a request #1.

Optionally, the first CF may be a server or a UE. Specifically, if the first CF is the server, the CCF may send a sensing computing request to the server via an NEF. If the first CF is the UE, the SCF may send a sensing computing request to the UE via an AMF.

As shown in FIG. 9, the communication method may include the following steps.

S901: The at least one CF including a first computing network element sends first information to the CCF. The first information may include at least one of service type information, location information, and computing resource information of the computing network element.

For content that may be carried in the first information, refer to descriptions in this embodiment of this application. Details are not described herein again.

For example, in S901, the CF may be used as an AF, and send a registration message to the CCF via the NEF. Alternatively, in S901, the CF may send a registration message to the NEF, the NEF stores the registration message in a UDR, and the CCF then obtains the registration message from the UDR via the NEF. It is assumed that there is only one CCF in a core network. Therefore, a problem of selecting the CCF does not exist.

It should be understood that S901 is an optional step. For example, the registration message of the CF may alternatively be sent or configured in the CCF in a communication manner of a non-3GPP network.

S902: A first device sends the request #1 to the SCF. The request #1 may be a sensing service request. For example, the request #1 may be for requesting a sensing service. Alternatively, the request #1 may be for requesting an operation related to a sensing service. Alternatively, the request #1 may be for requesting data (or sensing data) of a sensing service.

S902 may be implemented with reference to S702. Details are not described herein again. A difference between S902 and S702 lies in that the service control network element in S902 is the SCF, and the service control network element in S702 is the SCF.

It should be understood that an execution sequence of S902 and S901 is not specifically limited in this application.

S903: The SCF sends the request #2 to the CCF based on the request #1. In this application, the request #2 may include a sensing computing request.

Optionally, the SCF directly sends the request #2 to the CCF through a service-based interface, or the SCF sends the request #2 to the CCF via another network element (for example, the AMF or the NEF).

For example, the request #2 may include at least one of service type information, area information, and service requirement information of the sensing service. For example, the request #2 may include service type information of the sensing service and service requirement information of the sensing service, and the service requirement information may include area information.

It should be understood that the service type information of the sensing service in the request #2 may be obtained based on service type information of the sensing service in the request #1. For example, the two pieces of service type information are the same.

In addition, the area information in the request #2 may be obtained based on area information in the request #1, and the area information may indicate a sensing area. For example, if the area information in the request #1 includes geographic location information of the sensing area, the SCF may convert the geographic location information of the sensing area into 5G network area information, for example, a DNAI or a TA. In this case, the area information in the request #2 may include the DNAI or the TA. For another example, if the area information in the request #1 includes geographic location information of the sensing area, the SCF may convert the geographic location information of the sensing area into information about an access network device (for example, a base station) in the sensing area. For example, the information about the access network device may include geographic location information or an identifier of the access network device. In this case, the area information in the request #2 may include the geographic location information or the identifier of the access network device in the sensing area.

Optionally, the request #2 may further include a first identifier.

For example, the request #2 may include the service type information and/or a third information set. The CCF may determine the first computing network element based on the third information set.

The service type information in the request #2 may be determined by the service control network element based on the service type information in the request #1. The two pieces of service type information may be the same or different.

The third information set may be determined based on at least one of the service type information, the area information, and service requirement information in the request #1. For example, the third information set includes the at least one of the service type information, the area information, and the service requirement information in the request #1. Alternatively, the third information set includes information determined based on the at least one of the service type information, the area information, and the service requirement information in the request #1. Optionally, the third information set includes any information included in the at least one of the service type information, the area information, and the service requirement information in the request #1.

For example, the third information set may include at least one of the following information:
a third sensing distance, a third sensing area, a third sensing speed range, third sensing distance resolution, a third sensing angle measurement precision, third sensing speed resolution, a third sensing QoS requirement, a third sensing location point, a third sensing UE identifier, third sensing time information, a third sensing object identification accuracy, a third sensing object identification false alarm rate, a third sensing data precision, a third sensing data update frequency, a third sensing dimension indication, and a third sensing feedback manner.

For a determining manner and a meaning of each piece of information in the third information set, refer to descriptions of corresponding information in the second information set in the procedure in FIG. 7. For example, for a determining manner and a meaning of the third sensing distance, refer to descriptions of the second sensing distance in this application.

As described above, in S501, the SCF may receive the request #1 from the first device, where the request #1 carries the at least one of the service type information, the area information, and the service requirement information of the first service. The service requirement information may include one or more of items in the foregoing first information set. In step 602, if Manner c2 is used, the service control network element may send the request #2 to the computing control network element, where the request #2 may carry service control information and/or the third information set of the sensing service.

It may be found that the service control network element may determine the third information set based on one or more pieces of information in the first information set. In other words, the service control network element determines the third information set based on one or more pieces of information in the first information set, to further determine the information carried in the request #2.

S904: The CCF determines the first CF based on the request #2 and the first information of the at least one CF.

Based on the third information set carried in the request #2, in S904, the CCF may select the first computing network element based on the request #2 and the first information of the at least one computing network element and in a manner in which the SCF selects the first computing network element based on the request #1 (or the at least one of the service type information, the area information, and the service requirement information in the request #1) and the first information of the at least one computing network element in S703.

For example, the CCF may select, as the first CF based on the service type information of the computing network element in the first information of the computing network element and the service type information of the sensing service carried in the request #2, a CF that supports the service type information of the sensing service, so that the first CF supports processing of the data corresponding to the service type information of the sensing service. For another example, the CCF may select the first CF based on the location information (such as a DNAI) of the CF in the first information of the CF and the area information of the sensing service in the request #1. For example, the DNAI of the first CF belongs to a sensing area indicated by the area information, or an address location corresponding to the DNAI of the first CF belongs to the sensing area, or an address location corresponding to the DNAI of the first CF is adjacent to the sensing area. For another example, the CCF may select the first CF based on the location information and the sensing service type information.

Optionally, after determining the first CF, the CCF may perform at least one of the following S905-1 and S905-2.

S905-1: After determining the first CF, the CCF may send a sensing computing request to the first CF, to request the first CF to perform sensing computation. The sensing receiving request may include service type information of the sensing service.

The service type information may be determined based on the service type information in the request #1.

Correspondingly, the first CF may receive the sensing receiving request, and send a feedback message to the CCF, where the feedback message may carry first address information, and the first address information is used to receive first sensing data.

For example, the first address information may be an IP address of the CF or a combination of the IP address and a port number. Optionally, the first address information may be one of a plurality of pieces of address information of the CF, and the plurality of pieces of address information may be a plurality of IP addresses, or combinations of the plurality of IP addresses and at least one port number, or combinations of one IP address and a plurality of port numbers. This is not specifically limited.

Based on S905-1, the first CF may obtain (or store) a correspondence between the service type information of the sensing service and the first address information. Subsequently, when receiving data sent by using the first address information, the first CF may identify that the data is data of the service type information, and process the data in a data computing manner and/or a data processing manner corresponding to the service type information.

S905-2: After determining the first CF, the CCF may send a sensing computing request to the first CF, to request the first CF to perform sensing computation. The sensing receiving request may include service type information of the sensing service and the first identifier.

The service type information may be determined based on the service type information in the request #1.

Correspondingly, the first CF may receive the sensing receiving request, and send a feedback message, where the feedback message may carry address information, and the address information is not limited to receiving first sensing data, and may be further used to receive data of another service.

Based on S905-2, the first CF may obtain (or store) a correspondence between the service type information of the sensing service and the first identifier. Subsequently, when receiving data sent with the first identifier, the first CF may identify that the data is data of the service type information, and process the data in the data computing manner and/or the data processing manner corresponding to the service type information.

Optionally, if S905-2 is performed, the SCF may further send the first identifier to the first device. For example, the first identifier may be carried in a response message of the request #1.

S906: The CCF sends information about the first CF to an SCF.

The information about the first CF includes an identifier and/or address information of the first CF. The address information may include the first address information of the first CF.

Optionally, after S906, the SCF may alternatively perform at least one of S704-1 and S704-2. It should be understood that, in the procedure shown in FIG. 9, at least one of S905-1, S905-2, S704-1, and S704-2 may be performed.

In S906, the information about the first CF may be carried in a response message of the request #2, for example, a sensing computing response message.

S907: The SCF sends information about the first CF to an SMF.

Based on S705, the SMF may select a proper UPF based on the information about the first CF, so that the RAN can send the first sensing data to the first CF via the UPF. For details, refer to descriptions in S705.

S908: The SCF sends information about the first CF to a RAN. The information about the first CF is used by the RAN to send the first sensing data to the first CF.

The information about the first CF herein includes address information of the first CF and/or the identifier of the first CF.

In S908, the SCF may send, to the RAN, a sensing control request message that includes the information about the first CF and the first identifier.

Optionally, the sensing control request message may further include the service type information of the sensing service and/or sensing control information. The sensing control information is used to control the access network device (or a terminal device) to perform a sensing operation indicated by the sensing control information.

In the procedure shown in FIG. 9, optionally, the sensing control information may include at least one piece of the information in the third information set and/or at least one piece of the information in the second information set. In the procedure shown in FIG. 9, the SCF may send the third information set to the CCF, which is used by the CCF to select the first CF based on the third information set. To further reduce processing load of the SCF, the sensing control information may include some or all of the information in the third information set. Therefore, the SCF does not need to repeatedly determine a corresponding parameter.

For an implementation of S908, refer to descriptions in S706. A difference lies in that the service control network element is replaced from the SCF to the SCF.

After S908, the RAN may obtain the first sensing data. Specifically, the RAN sends a sensing signal and receives an echo signal. The echo signal is a reflected signal of an object for the sensing signal. The RAN performs particular processing based on the echo signal to generate the first sensing data, or directly uses data corresponding to echo signal as the first sensing data.

In an example, the RAN may send the first sensing data to the first CF based on the first address information of the first CF.

In another example, the RAN may send the first sensing data and the first identifier to the first CF.

S909: The first CF generates the second sensing data based on the first sensing data from the RAN. Alternatively, the second sensing data is obtained based on the first sensing data.

For an implementation of S909, refer to descriptions in S707.

S910: The first CF sends the second sensing data.

Correspondingly, the first device receives the second sensing data.

For example, in S910, the first CF may send the second sensing data in this sending manner of the data #2 of the first service described in this application. For example, the first CF may send the second sensing data in one or a combination of a plurality of manners in Manner b 1, Manner b2, or Manner b3. For a specific sending manner, refer to descriptions in this application. Details are not described herein again.

Based on the procedure shown in FIG. 9, the service control function, a computing network element selection function, and the service computing function may be separated from each other by using the architecture shown in FIG. 8, to shorten service delay, and reduce a processing load of the core network element. In addition, because the computing network element may support processing of the data of the plurality of service types, utilization of computing power resources in this network can be improved, thereby improving processing efficiency of the service data.

In the foregoing embodiments provided in this application, solutions of the communication methods provided in embodiments of this application are separately described from perspectives of functional modules or devices and interaction between the functional modules or devices. It may be understood that, to implement the foregoing functions, the functional modules or devices, for example, the service control network element, the computing control network element, the computing network element, and the access network device, includes corresponding hardware structures and/or software modules for performing the functions. A person of ordinary skill in the art should easily be aware that, with reference to the example units, algorithms, and steps described in embodiments disclosed in this application, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

For example, when the foregoing functional modules or devices implement corresponding functions by using software modules, a communication apparatus provided in an embodiment of this application may be shown in FIG. 11. Refer to FIG. 11. The communication apparatus 1100 may include a communication module 1101 and a processing module 1102. The communication module 1101 is used by the communication apparatus 1100 to receive information (a message or data) and/or send information (a message or data), and the processing module 1102 is configured to: control and manage an action of the communication apparatus 1100. The processing module 1102 may further control a step performed by the communication module 1101.

Optionally, the communication apparatus 1100 may be specifically the service control network element, the computing control network element, the computing network element, or the access network device in the foregoing embodiments, a processor in the service control network element, the computing control network element, the computing network element, or the access network device, a chip, a chip system, a functional module, or the like. Alternatively, the communication apparatus 1100 may be specifically a processor in the service control network element, the computing control network element, the computing network element, or the access network device in the foregoing embodiments, a chip, a chip system, a functional module, or the like.

In an embodiment, when the communication apparatus 1100 is configured to implement a function of the service control network element in the foregoing embodiments, the communication module 1101 may be configured to receive a first request from a first device, where the first request is for requesting a first service. The processing module 1102 may be configured to determine a first computing network element based on the first request, where the first computing network element is configured to generate first data of the first service. The communication module 1101 may further send, for the service control network element, information about the first computing network element to an access network device. It should be understood that the first request in this embodiment may correspond to the request #1 in the foregoing method embodiments, and the first data in this embodiment may correspond to the data #2 in the foregoing method embodiments.

In a possible implementation, the first request includes service type information and/or area information.

In a possible implementation, the processing module 1102 may specifically determine the first computing network element based on the first request and first information of at least one computing network element, where the first information includes at least one of service type information, location information, and computing resource information.

In a possible implementation, the communication module 1101 may further receive the first information from the computing network element.

In a possible implementation, the communication module 1101 may further send a second request to a computing control network element based on the first request, where the second request corresponds to the first service, and the second request is for requesting or obtaining the information about the first computing network element. The communication module 1101 may further receive, for the service control network element, the information about the first computing network element from the computing control network element. It should be understood that the second request in this embodiment may correspond to the request #2 in the foregoing method embodiments.

In a possible implementation, the second request further includes a first identifier, and the first identifier corresponds to the first service.

In a possible implementation, the communication module 1101 may further send the information about the first computing network element to the first device. Alternatively, the communication module 1101 may further send the information about the first device to the first computing network element. Alternatively, the communication module 1101 may further receive the first data from the first computing network element; and the communication module 1101 may further send the first data to the first device.

In a possible implementation, the communication module 1101 may further send second information to the first computing network element, where the second information indicates a condition for the computing network element to send the first data.

In a possible implementation, the information about the first computing network element includes: first address information, where the first address information is used to receive second data of the first service, and the second data is used to generate the first data; and/or an identifier of the first computing network element. It should be understood that the second data in this embodiment may correspond to the data #1 in the foregoing method embodiment.

In a possible implementation, the information about the first computing network element includes the first address information, and the communication module 1101 may further receive the first address information from the first computing network element. Alternatively, the communication module 1101 may further receive a first correspondence from the first computing network element, where the first correspondence includes a correspondence between the service type information and address information, the service type information includes the service type information of the first service, and the address information includes the first address information.

In a possible implementation, the service control network element sends third information to the first computing network element, where the third information includes at least one of the following: the service type information of the first service, or the service type information of the first service and the first identifier, where the first identifier corresponds to the first service.

In a possible implementation, the communication module 1101 may further send the first identifier to the access network device and/or the first device, where the first identifier corresponds to the first service.

In an embodiment, when the communication apparatus 1100 is configured to implement a function of the computing control network element in the foregoing embodiments, the communication module 1101 may be configured to receive a first request from a service control network element, where the first request may correspond to a first service, the first request is for requesting or obtaining information about a first computing network element, and the first computing network element is configured to generate first data of the first service. The processing module 1102 may be configured to determine the first computing network element based on the first request. The communication module 1101 may be further configured to send the information about the first computing network element to the service control network element. It should be understood that the first request in this embodiment may correspond to the request #2 in the foregoing method embodiments, and the first data in this embodiment may correspond to the data #2 in the foregoing method embodiments.

In a possible implementation, the first request includes service type information and/or area information. The processing module 1102 may be specifically configured to determine the first computing network element based on the first request and first information of at least one computing network element, where the first information includes at least one of service type information, location information, and computing resource information.

In a possible implementation, the communication module 1101 may further receive the first information from the computing network element.

In a possible implementation, the communication module 1101 may further send information about the service control network element to the first computing network element.

In a possible implementation, the communication module 1101 may further send second information to the first computing network element, where the second information indicates information about a condition for the computing network element to send the first data.

In a possible implementation, the information about the first computing network element includes: first address information, where the first address information is used to receive second data of the first service, and the second data is used to generate the first data; and/or an identifier of the first computing network element. It should be understood that the second data in this embodiment may correspond to the data #1 in the foregoing method embodiments.

In a possible implementation, the communication module 1101 may further receive the first address information from the first computing network element. Alternatively, the communication module 1101 may further receive a first correspondence from the first computing network element, where the first correspondence includes a correspondence between the service type information and address information, the service type information includes the service type information of the first service, and the address information includes the first address information.

In a possible implementation, the communication module 1101 may further send third information to the first computing network element, where the third information includes at least one of the following: the service type information of the first service, or the service type information of the first service and a first identifier, where the first identifier corresponds to the first service.

In a possible implementation, the first request further includes the first identifier, and the first identifier corresponds to the first service.

In an embodiment, when the communication apparatus 1100 is configured to implement a function of the computing network element (including the first computing network element) in the foregoing embodiments, the processing module 1102 may be configured to generate first information, where the first information includes at least one of service type information, location information, and computing resource information. The communication module 1101 may be configured to send the first information to a computing control network element or a service control network element.

In a possible implementation, the communication module 1101 may further receive first data of a first service. The computing network element generates second data of the first service based on the first data. The communication module 1101 may further send the second data. It should be understood that the first data in this embodiment may correspond to the data #1 in the foregoing method embodiments, and the second data may correspond to the data #2 in the foregoing method embodiments.

In a possible implementation, the communication module 1101 may specifically receive, for the computing network element, a first request from a first device, where the first request is for requesting the second data. The communication module 1101 may further send the second data to the first device based on the first request. Alternatively, the communication module 1101 may further receive information about a first device from the computing control network element or the service control network element. The communication module 1101 may further send the second data to the first device based on the information about the first device. Alternatively, the communication module 1101 may further receive information about the service control network element from the computing control network element. The communication module 1101 may further send the second data to the service control network element.

In a possible implementation, the communication module 1101 may further receive second information from the computing control network element or the service control network element, where the second information indicates a condition for the computing network element to send the first data. The communication module 1101 may further send, for the computing network element, the second data based on the second information.

In a possible implementation, the communication module 1101 may specifically receive the first data by using first address information, where the first address information corresponds to the service type information of the first service.

In a possible implementation, the communication module 1101 may further send the first address information to the computing control network element or the service control network element. Alternatively, the communication module 1101 may further send a first correspondence to the computing control network element or the service control network element, where the first correspondence includes a correspondence between the service type information and address information, the service type information includes the service type information of the first service, and the address information includes the first address information.

In a possible implementation, the communication module 1101 may further receive the first address information. Alternatively, the communication module 1101 may further receive a first correspondence, where the first correspondence includes a correspondence between the service type information and address information, the service type information includes the service type information of the first service, and the address information includes the first address information.

In a possible implementation, the communication module 1101 may further receive third information from the computing control network element or the service control network element, where the third information includes at least one of the following: the service type information of the first service, or the service type information of the first service and a first identifier, where the first identifier corresponds to the first service.

In a possible implementation, the communication module 1101 may specifically receive the first data and the first identifier, where the first identifier corresponds to the first service.

In an embodiment, when the communication apparatus 1100 is configured to implement a function of the access network device in the foregoing embodiments, the communication module 1101 may be configured to receive, for the access network device, information about a first computing network element and control information corresponding to a first service from a computing control network element or a service control network element. The communication module 1101 may be further configured to send first data of the first service to the first computing network element. In this embodiment, the first data may correspond to the data #1 in the foregoing method embodiments.

In a possible implementation, the communication module 1101 may further receive a first identifier from the computing control network element or the service control network element, where the first identifier is related to the first service. The communication module 1101 may specifically send the first data of the first service and the first identifier to the first computing network element.

In a possible implementation, the information about the first computing network element includes first address information of the first computing network element, and the first address information is used to send the first data of the first service. The communication module 1101 may specifically send second data to the first computing network element based on the first address information. In this embodiment, the second data may correspond to the data #2 in the foregoing method embodiments.

It should be noted that the foregoing division into the modules of the communication apparatus in this embodiment of this application is an example, and is merely logical function division. In actual implementation, there may be another division manner. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

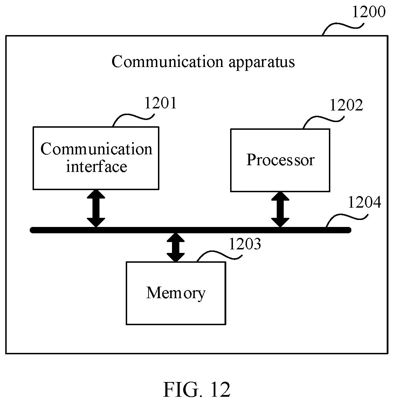

For example, when the foregoing functional module or the device implements a corresponding function by hardware, a communication apparatus provided in an embodiment of this application may be shown in FIG. 12. Refer to FIG. 12. The communication apparatus 1200 may include a communication interface 1201 and a processor 1202. Optionally, the communication apparatus 1200 may further include a memory 1203.

Specifically, the processor 1202 may be a central processing unit (central processing unit, CPU), a network processor (network processor, NP), or a combination of the CPU and the NP. The processor 1202 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The communication interface 1201, the processor 1202, and the memory 1203 are connected to each other. Optionally, the communication interface 1201, the processor 1202, and the memory 1203 are connected to each other by using a bus 1204. The bus 1204 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 12, but this does not mean that there is only one bus or only one type of bus.

In an optional implementation, the memory 1203 is configured to store a program and the like. Specifically, the program may include program code, and the program code includes computer operation instructions. The memory 1203 may include a RAM, and may further include a non-volatile memory (non-volatile memory), such as one or more disk memories. The processor 1202 executes the application program stored in the memory 1203, to implement the foregoing function, thereby implementing a function of the communication apparatus 1200.

Optionally, the communication apparatus 1200 may be the service control network element, the computing control network element, the computing network element (including the first computing network element), or the access network device in the foregoing embodiments.

In an embodiment, when the communication apparatus 1200 implements a function of the service control network element in the embodiments shown in FIG. 5, FIG. 7, FIG. 9, and FIG. 10, the communication interface 1201 may implement a transceiver operation performed by the service control network element in the embodiments shown in FIG. 5, FIG. 7, FIG. 9, and FIG. 10. The processor 1202 may implement another operation other than the transceiver operation performed by the service control network element in the embodiments shown in FIG. 5, FIG. 7, FIG. 9, and FIG. 10. For specific related specific descriptions, refer to related descriptions in the embodiments shown in FIG. 5, FIG. 7, FIG. 9, and FIG. 10. Details are not described herein again.

In an embodiment, when the communication apparatus 1200 implements a function of the computing control network element in the embodiments shown in FIG. 9 and FIG. 10, the communication interface 1201 may implement a transceiver operation performed by the computing control network element in the embodiments shown in FIG. 9 and FIG. 10. The processor 1202 may implement another operation other than the transceiver operation performed by the computing control network element in the embodiments shown in FIG. 9 and FIG. 10. For specific related specific descriptions, refer to related descriptions in the embodiments shown in FIG. 9 and FIG. 10. Details are not described herein again.

In an embodiment, when the communication apparatus 1200 implements a function of the computing network element (including the first computing network element) in the embodiments shown in FIG. 7, FIG. 9, and FIG. 10, the communication interface 1201 may implement a transceiver operation performed by the computing network element in the embodiments shown in FIG. 7, FIG. 9, and FIG. 10. The processor 1202 may implement another operation other than the transceiver operation performed by the computing network element in the embodiments shown in FIG. 7, FIG. 9, and FIG. 10. For specific related specific descriptions, refer to related descriptions in the embodiments shown in FIG. 7, FIG. 9, and FIG. 10. Details are not described herein again.

In an embodiment, when the communication apparatus 1200 implements a function of the access network device in the embodiments shown in FIG. 5, FIG. 7, and FIG. 9, the communication interface 1201 may implement a transceiver operation performed by the access network device in the embodiments shown in FIG. 5, FIG. 7, and FIG. 9. The processor 1202 may implement another operation other than the transceiver operation performed by the access network device in the embodiments shown in FIG. 5, FIG. 7, and FIG. 9. For specific related specific descriptions, refer to related descriptions in the embodiments shown in FIG. 5, FIG. 7, and FIG. 9. Details are not described herein again.

Based on the foregoing embodiments, an embodiment of this application provides a network structure. The network structure may include the service control network element, the computing control network element, the computing network element (including the first computing network element), the access network device, or the like in the foregoing embodiments.

An embodiment of this application further provides a computer-readable storage medium. The computer-readable storage medium is configured to store a computer program. When the computer program is executed by a computer, the computer may implement the communication methods provided in the method embodiments.

An embodiment of this application further provides a computer program product. The computer program product is configured to store a computer program. When the computer program is executed by a computer, the computer may implement the communication methods provided in the method embodiments.

An embodiment of this application further provides a chip, including a processor. The processor is coupled to a memory, and is configured to invoke a program in the memory, so that the chip implements the communication methods provided in the method embodiments.

An embodiment of this application further provides a chip. The chip is coupled to a memory, and the chip is configured to implement the communication methods provided in the foregoing method embodiments.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the methods, the devices (systems), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Clearly, a person skilled in the art can make various modifications and variations to this application without departing from the scope of this application. In this way, if these modifications and variations to this application fall within the scope of the claims of this application and their equivalent technologies, this application is also intended to cover these modifications and variations.

## Claims

1. A communication method, comprising:
receiving, by a service control network element, a first request from a first device, wherein the first request is for requesting a first service;
determining, by the service control network element, a first computing network element based on the first request, wherein the first computing network element is configured to generate first data of the first service; and
sending, by the service control network element, information about the first computing network element to an access network device.

2. The method according to claim 1, wherein the first request comprises service type information and/or area information.

3. The method according to claim 1 or 2, wherein the determining, by the service control network element, a first computing network element based on the first request comprises:
determining, by the service control network element, the first computing network element based on the first request and first information of at least one computing network element, wherein
the first information comprises at least one of service type information, location information, and computing resource information.

4. The method according to claim 3, wherein the method further comprises:
receiving, by the service control network element, the first information from the computing network element.

5. The method according to claim 1 or 2, wherein the determining, by the service control network element, a first computing network element based on the first request comprises:
sending, by the service control network element, a second request to a computing control network element based on the first request, wherein the second request corresponds to the first service, and the second request is used to obtain the information about the first computing network element; and
receiving, by the service control network element, the information about the first computing network element from the computing control network element.

6. The method according to claim 5, wherein the second request further comprises a first identifier, and the first identifier corresponds to the first service.

7. The method according to any one of claims 1 to 6, wherein the method further comprises:
sending, by the service control network element, the information about the first computing network element to the first device;
sending, by the service control network element, information about the first device to the first computing network element; or
receiving, by the service control network element, the first data from the first computing network element; and sending, by the service control network element, the first data to the first device.

8. The method according to any one of claims 1 to 7, wherein the method further comprises:
sending, by the service control network element, second information to the first computing network element, wherein the second information indicates a condition for the computing network element to send the first data.

9. The method according to any one of claims 1 to 8, wherein the information about the first computing network element comprises:
first address information, wherein the first address information is used to receive second data of the first service, and the second data is used to generate the first data; and/or
an identifier of the first computing network element.

10. The method according to claim 9, wherein the information about the first computing network element comprises the first address information, and the method further comprises:
receiving, by the service control network element, the first address information from the first computing network element; or
receiving, by the service control network element, a first correspondence from the first computing network element, wherein the first correspondence comprises a correspondence between the service type information and address information, the service type information comprises service type information of the first service, and the address information comprises the first address information.

11. The method according to any one of claims 1 to 10, wherein the method further comprises:
sending, by the service control network element, the following information to the first computing network element:
the service type information of the first service; or
the service type information of the first service and the first identifier, wherein the first identifier corresponds to the first service.

12. The method according to any one of claims 1 to 11, wherein the method further comprises:
sending, by the service control network element, the first identifier to the access network device and/or the first device, wherein the first identifier corresponds to the first service.

13. A communication method, comprising:
receiving, by a computing control network element, a first request from a service control network element, wherein the first request corresponds to a first service, the first request is used to obtain information about a first computing network element, and the first computing network element is configured to generate first data of the first service;
determining, by the computing control network element, the first computing network element based on the first request; and
sending, by the computing control network element, the information about the first computing network element to the service control network element.

14. The method according to claim 13, wherein the first request comprises service type information and/or area information; and
the determining, by the computing control network element, the first computing network element based on the first request comprises:
determining, by the computing control network element, the first computing network element based on the first request and first information of at least one computing network element, wherein
the first information comprises at least one of service type information, location information, and computing resource information.

15. The method according to claim 14, wherein the method further comprises:
receiving, by the computing control network element, the first information from the computing network element.

16. The method according to any one of claims 13 to 15, wherein the method further comprises:
sending, by the computing control network element, information about the service control network element to the first computing network element.

17. The method according to any one of claims 13 to 16, wherein the method further comprises:
sending, by the computing control network element, second information to the first computing network element, wherein the second information indicates a condition for the computing network element to send the first data.

18. The method according to any one of claims 13 to 17, wherein the information about the first computing network element comprises:
first address information, wherein the first address information is used to receive second data of the first service, and the second data is used to generate the first data; and/or
an identifier of the first computing network element.

19. The method according to claim 18, wherein the method further comprises:
receiving, by the computing control network element, the first address information from the first computing network element; or
receiving, by the computing control network element, a first correspondence from the first computing network element, wherein the first correspondence comprises a correspondence between the service type information and address information, the service type information comprises service type information of the first service, and the address information comprises the first address information.

20. The method according to any one of claims 13 to 19, wherein the method further comprises:
sending, by the computing control network element, the following information to the first computing network element:
the service type information of the first service; or
the service type information of the first service and a first identifier, wherein the first identifier corresponds to the first service.

21. The method according to any one of claims 13 to 20, wherein the first request further comprises the first identifier, and the first identifier corresponds to the first service.

22. A communication method, comprising:
generating, by a computing network element, first information, wherein the first information comprises at least one of service type information, location information, and computing resource information; and
sending, by the computing network element, the first information to a computing control network element or a service control network element.

23. The method according to claim 22, wherein the method further comprises:
receiving, by the computing network element, first data of a first service;
generating, by the computing network element, second data of the first service based on the first data; and
sending, by the computing network element, the second data.

24. The method according to claim 23, wherein the sending, by the computing network element, the second data comprises:
receiving, by the computing network element, a first request from a first device, wherein the first request is for requesting the second data; and
sending, by the computing network element, the second data to the first device based on the first request; or
receiving, by the computing network element, information about a first device from the computing control network element or the service control network element; and
sending, by the computing network element, the second data to the first device based on the information about the first device; or
receiving, by the computing network element, information about the service control network element from the computing control network element; and
sending, by the computing network element, the second data to the service control network element.

25. The method according to claim 23 or 24, wherein the sending, by the computing network element, the second data comprises:
receiving, by the computing network element, second information from the computing control network element or the service control network element, wherein the second information indicates a condition for the computing network element to send the first data; and
sending, by the computing network element, the second data based on the second information.

26. The method according to any one of claims 22 to 25, wherein the receiving, by the computing network element, first data of a first service comprises:
receiving, by the computing network element, the first data by using first address information, wherein the first address information corresponds to service type information of the first service.

27. The method according to claim 26, wherein the method further comprises:
sending, by the computing network element, the first address information to the computing control network element or the service control network element; or
sending, by the computing network element, a first correspondence to the computing control network element or the service control network element, wherein the first correspondence comprises a correspondence between the service type information and address information, the service type information comprises the service type information of the first service, and the address information comprises the first address information.

28. The method according to claim 26, wherein the method further comprises:
receiving, by the computing network element, the first address information; or
receiving, by the computing network element, a first correspondence, wherein the first correspondence comprises a correspondence between the service type information and address information, the service type information comprises the service type information of the first service, and the address information comprises the first address information.

29. The method according to any one of claims 22 to 28, wherein the method further comprises:
receiving, by the computing network element, third information from the computing control network element or the service control network element, wherein
the third information comprises at least one of the following:
the service type information of the first service; or
the service type information of the first service and a first identifier, wherein the first identifier corresponds to the first service.

30. The method according to any one of claims 22 to 29, wherein the receiving, by the computing network element, first data of a first service comprises:
receiving, by the computing network element, the first data and the first identifier, wherein the first identifier corresponds to the first service.

31. A communication method, comprising:
receiving, by an access network device from a computing control network element or a service control network element, information about a first computing network element and control information corresponding to a first service; and
sending, by the access network device, first data of the first service to the first computing network element.

32. The method according to claim 31, wherein the method further comprises:
receiving, by the access network device, a first identifier from the computing control network element or the service control network element, wherein the first identifier is related to the first service; and
the sending, by the access network device, first data of the first service to the first computing network element comprises:
sending, by the access network device, the first data of the first service and the first identifier to the first computing network element.

33. The method according to claim 31 or 32, wherein the information about the first computing network element comprises first address information of the first computing network element, and the first address information is used to send the first data of the first service; and
the sending, by the access network device, first data of the first service to the first computing network element comprises:
sending, by the access network device, second data to the first computing network element based on the first address information.

34. A communication apparatus, comprising:
a transceiver module, configured to receive a first request from a first device, wherein the first request is for requesting a first service; and
a processing module, configured to determine a first computing network element based on the first request, wherein the first computing network element is configured to generate first data of the first service, wherein
the transceiver module is further configured to send information about the first computing network element to an access network device.

35. The apparatus according to claim 34, wherein the first request comprises service type information and/or area information.

36. The apparatus according to claim 34 or 35, wherein the processing module is specifically configured to:
determine the first computing network element based on the first request and first information of at least one computing network element, wherein
the first information comprises at least one of service type information, location information, and computing resource information.

37. The apparatus according to claim 36, wherein the transceiver module is further configured to:
receive the first information from the computing network element.

38. The apparatus according to claim 34 or 35, wherein the processing module is specifically configured to:
send a second request to a computing control network element based on the first request, wherein the second request corresponds to the first service, and the second request is used to obtain the information about the first computing network element; and
receive the information about the first computing network element from the computing control network element.

39. The apparatus according to claim 38, wherein the second request further comprises a first identifier, and the first identifier corresponds to the first service.

40. The apparatus according to any one of claims 34 to 39, wherein the transceiver module is further configured to:
send the information about the first computing network element to the first device;
send information about the first device to the first computing network element; or
receive the first data from the first computing network element; and send the first data to the first device.

41. The apparatus according to any one of claims 34 to 40, wherein the transceiver module is further configured to:
send second information to the first computing network element, wherein the second information indicates a condition for the computing network element to send the first data.

42. The apparatus according to any one of claims 34 to 41, wherein the information about the first computing network element comprises:
first address information, wherein the first address information is used to receive second data of the first service, and the second data is used to generate the first data; and/or
an identifier of the first computing network element.

43. The apparatus according to claim 42, wherein the information about the first computing network element comprises the first address information, and the transceiver module is further configured to:
receive the first address information from the first computing network element; or
receive a first correspondence from the first computing network element, wherein the first correspondence comprises a correspondence between the service type information and address information, the service type information comprises service type information of the first service, and the address information comprises the first address information.

44. The apparatus according to any one of claims 34 to 43, wherein the transceiver module is further configured to:
send the following information to the first computing network element:
the service type information of the first service; or
the service type information of the first service and the first identifier, wherein the first identifier corresponds to the first service.

45. The apparatus according to any one of claims 34 to 44, wherein the transceiver module is further configured to:
send the first identifier to the access network device and/or the first device, wherein the first identifier corresponds to the first service.

46. A communication apparatus, comprising:
a transceiver module, configured to receive a first request from a service control network element, wherein the first request corresponds to a first service, the first request is used to obtain information about a first computing network element, and the first computing network element is configured to generate first data of the first service; and
a processing module, configured to determine the first computing network element based on the first request, wherein
the transceiver module is further configured to send the information about the first computing network element to the service control network element.

47. The apparatus according to claim 46, wherein the first request comprises service type information and/or area information; and
the processing module is specifically configured to:
determine the first computing network element based on the first request and first information of at least one computing network element, wherein
the first information comprises at least one of service type information, location information, and computing resource information.

48. The apparatus according to claim 47, wherein the transceiver module is further configured to:
receive the first information from the computing network element.

49. The apparatus according to any one of claims 46 to 48, wherein the transceiver module is further configured to:
send information about the service control network element to the first computing network element.

50. The apparatus according to any one of claims 46 to 49, wherein the transceiver module is further configured to:
send second information to the first computing network element, wherein the second information indicates a condition for the computing network element to send the first data.

51. The apparatus according to any one of claims 46 to 50, wherein the information about the first computing network element comprises:
first address information, wherein the first address information is used to receive second data of the first service, and the second data is used to generate the first data; and/or
an identifier of the first computing network element.

52. The apparatus according to claim 51, wherein the transceiver module is further configured to:
receive the first address information from the first computing network element; or
receive a first correspondence from the first computing network element, wherein the first correspondence comprises a correspondence between the service type information and address information, the service type information comprises service type information of the first service, and the address information comprises the first address information.

53. The apparatus according to any one of claims 46 to 52, wherein the transceiver module is further configured to:
send the following information to the first computing network element:
the service type information of the first service; or
the service type information of the first service and a first identifier, wherein the first identifier corresponds to the first service.

54. The apparatus according to any one of claims 46 to 53, wherein the first request further comprises the first identifier, and the first identifier corresponds to the first service.

55. A communication apparatus, comprising:
a processing module, configured to generate first information, wherein the first information comprises at least one of service type information, location information, and computing resource information; and
a transceiver module, configured to send the first information to a computing control network element or a service control network element.

56. The apparatus according to claim 55, wherein the transceiver module is further configured to:
receive first data of a first service;
generate second data of the first service based on the first data; and
send the second data.

57. The apparatus according to claim 56, wherein the transceiver module is specifically configured to:
receive a first request from a first device, wherein the first request is for requesting the second data; and
send the second data to the first device based on the first request; or
receive information about a first device from the computing control network element or the service control network element; and
send the second data to the first device based on the information about the first device; or
receive information about the service control network element from the computing control network element; and
send the second data to the service control network element.

58. The apparatus according to claim 56 or 57, wherein the transceiver module is specifically configured to:
receive second information from the computing control network element or the service control network element, wherein the second information indicates a condition for sending the first data; and
send the second data based on the second information.

59. The apparatus according to any one of claims 55 to 58, wherein the transceiver module is specifically configured to:
receive the first data by using first address information, wherein the first address information corresponds to service type information of the first service.

60. The apparatus according to claim 59, wherein the transceiver module is further configured to:
send the first address information to the computing control network element or the service control network element; or
send a first correspondence to the computing control network element or the service control network element, wherein the first correspondence comprises a correspondence between the service type information and address information, the service type information comprises the service type information of the first service, and the address information comprises the first address information.

61. The apparatus according to claim 59, wherein the transceiver module is further configured to:
receive the first address information; or
receive a first correspondence, wherein the first correspondence comprises a correspondence between the service type information and address information, the service type information comprises the service type information of the first service, and the address information comprises the first address information.

62. The apparatus according to any one of claims 55 to 61, wherein the transceiver module is further configured to:
receive third information from the computing control network element or the service control network element, wherein
the third information comprises at least one of the following:
the service type information of the first service; or
the service type information of the first service and a first identifier, wherein the first identifier corresponds to the first service.

63. The apparatus according to any one of claims 55 to 62, wherein the transceiver module is specifically configured to:
receive the first data and the first identifier, wherein the first identifier corresponds to the first service.

64. A communication apparatus, comprising:
a transceiver module, configured to receive, from a computing control network element or a service control network element, information about a first computing network element and control information corresponding to a first service, wherein
the transceiver module is further configured to send first data of the first service to the first computing network element.

65. The apparatus according to claim 64, wherein the transceiver module is further configured to:
receive a first identifier from the computing control network element or the service control network element, wherein the first identifier is related to the first service; and
the transceiver module is specifically configured to:
send the first data of the first service and the first identifier to the first computing network element.

66. The apparatus according to claim 64 or 65, wherein the information about the first computing network element comprises first address information of the first computing network element, and the first address information is used to send the first data of the first service; and the transceiver module is specifically configured to:
send second data to the first computing network element based on the first address information.

67. A communication apparatus, comprising a processor, wherein the processor is coupled to a memory, and is configured to: read and execute program instructions stored in the memory, to enable the communication apparatus to perform the method according to any one of claims 1 to 12.

68. A communication apparatus, comprising a processor, wherein the processor is coupled to a memory, and is configured to: read and execute program instructions stored in the memory, to enable the communication apparatus to perform the method according to any one of claims 13 to 21.

69. A communication apparatus, comprising a processor, wherein the processor is coupled to a memory, and is configured to: read and execute program instructions stored in the memory, to enable the communication apparatus to perform the method according to any one of claims 22 to 30.

70. A communication apparatus, comprising a processor, wherein the processor is coupled to a memory, and is configured to: read and execute program instructions stored in the memory, to enable the communication apparatus to perform the method according to any one of claims 31 to 33.

71. A computer-readable storage medium, storing program instructions, wherein when the program instructions are run on a computer, the computer is enabled to perform the method according to any one of claims 1 to 12, the method according to any one of claims 13 to 21, the method according to any one of claims 22 to 30, or the method according to any one of claims 31 to 33.

72. A computer program product, comprising computer program code or instructions, wherein when the computer program code or the instructions are run on a computer, the computer is enabled to perform the method according to any one of claims 1 to 12, the method according to any one of claims 13 to 21, the method according to any one of claims 22 to 30, or the method according to any one of claims 31 to 33.

73. A chip, comprising a processor, wherein the processor is configured to implement the method according to any one of claims 1 to 12, the method according to any one of claims 13 to 21, the method according to any one of claims 22 to 30, or the method according to any one of claims 31 to 33.

74. A communication system, comprising a service control network element and an access network device, wherein the service control network element is configured to perform the method according to any one of claims 1 to 12, and the access network device is configured to perform the method according to any one of claims 31 to 33.

75. The communication system according to claim 74, further comprising a computing control network element and/or a computing network element, wherein the computing control network element is configured to perform the method according to any one of claims 13 to 21, and the computing network element is configured to perform the method according to any one of claims 22 to 30.
